(19) **Europäisches Patentamt**
**European Patent Office**
**Office européen des brevets**

(11) **EP 4 684 646 A1**

(12) **EUROPEAN PATENT APPLICATION**

(43) Date of publication:
**28.01.2026 Bulletin 2026/05**

(21) Application number: **25191810.8**

(22) Date of filing: **25.07.2025**

(51) International Patent Classification (IPC):
***A23D 7/005*** (2006.01)    ***A23D 7/01*** (2006.01)

(52) Cooperative Patent Classification (CPC):
**A23D 7/0053; A23D 7/011**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.07.2024 PCT/JP2024/026591**
**09.09.2024 PCT/JP2024/032229**

(71) Applicant: **Nissui Corporation**
**Tokyo 105-8676 (JP)**

(72) Inventors:
• **SAKAMOTO, Hiroko**
**Minato-ku, Tokyo, 105-8676 (JP)**
• **IMATOMI, Nana**
**Minato-ku, Tokyo, 105-8676 (JP)**

(74) Representative: **Conti, Marco**
**Bugnion S.p.A.**
**Via di Corticella, 87**
**40128 Bologna (IT)**

(54) **GRANULAR GEL FOOD**

(57)    Provided is a granular gel food containing an oil component and a gelling agent, wherein the oil component is a polyunsaturated fatty acid (PUFA), a salt thereof or an ester thereof, and the content of the oil component is 0.1% by weight or more, based on the total weight of the granular gel food, for the purpose of providing a stable granular gel food which has a suppressed odor, derived from the source thereof, such as a raw smell peculiar to fish, generated by heating during the production and storage after the production and thereby has a good flavor, and which has a suppressed leakage of oil components.

EP 4 684 646 A1

**Description**

TECHNICAL FIELD

The present invention relates to a granular gel food containing an oil component and a method for producing the same.

BACKGROUND ART

Polyunsaturated fatty acids (PUFAs) contained in biological oils such as fish oils and microbial oils have been widely used as functional ingredients. Foods for easy intake of PUFAs have been studied. For example, for the intake of docosahexaenoic acid (DHA), a composition containing a self-emulsifying fat and oil containing a glycerol fatty acid ester that contains DHA as a constituent fatty acid has been investigated (PLT 1). In addition, a jelly-like candy containing γ-linolenic acid has been investigated for the purpose of improving oil leakage during storage or the like (PLT 2).

In recent years, consumers have been increasingly showing a high palatability for food products, and there is an increasing demand not only for taste and functionality, but also for aroma. PUFAs are known to easily degrade due to oxidation and the like, and to generate a peculiar odor as they degrade. Studies have been carried out on the suppression of odors caused by degradation in PUFA-containing compositions. For example, mixing PUFAs with vegetable oil has been studied (PLT 3).

The production of gel-type foods containing PUFAs has also been studied (PLTs 4 to 6).

CITATION LIST

PATENT LITERATURE

PTL 1: Japanese Patent Laid-Open No. 2012-46500
PTL 2: Japanese Patent Laid-Open No. 11-56245
PTL 3: Japanese Patent Laid-Open No. 2019-71803
PTL 4: Japanese Patent Laid-Open No. 2008-259519
PTL 5: Japanese Patent Laid-Open No. 7-227227
PTL 6: Japanese Patent Laid-Open No. 2018-46788

SUMMARY OF INVENTION

TECHNICAL PROBLEM

Gel-like food products containing PUFA and emulsifying agent have a problem of generating fishy odor due to degradation of ingredients caused by heat applied during the production process thereof and storage after the production thereof. An object of the present invention is to provide a stable granular gel food which has a good flavor due to a suppressed odor, such as the raw smell peculiar to fish, the odor being caused by the source thereof, and being generated during heating in production and storage after production, and which has a suppressed leakage of oil components. Scope of the present invention is to overcome at least one of the aforementioned drawbacks. This scope is achieved by the granular gel food comprising a PUFA, the method for producing a granular gel food comprising a PUFA, the emulsifying agent composition comprising an oil component and an emulsifying agent, the emulsifying agent composition comprising a gelling agent and an emulsifying agent, and the granular gel food according to the appended claims.

SOLUTION TO PROBLEM

The present disclosure includes the following inventions:

[1-1] A granular gel food containing an oil component and a gelling agent, wherein the oil component is polyunsaturated fatty acid (PUFA), a salt thereof or an ester thereof, and a content of the oil component is 0.1% by weight or more, based on a total weight of the granular gel food.

The present invention relates to a granular gel food comprising a PUFA, a method for producing a granular gel food comprising a PUFA, an emulsifying agent composition comprising an oil component and an emulsifying agent, an emulsifying agent composition comprising a gelling agent and an emulsifying agent, a granular gel food. According to an aspect of the present description, the present invention provides a granular gel food. In the context of the present description, the term "granular gel food" refers to a food composition that has a gel-like texture, typically characterized by a semi-solid, jelly-like consistency resulting from the presence of a gelling agent. This can include hydrogels, thermoreversible gels, or other systems formed via physical or chemical gelation.

The granular gel food is in granular or particulate form, meaning the gel exists as discrete granules, beads, or particles rather than a continuous gel matrix.

The granular gel food comprises an oil component. The granular gel food comprises a gelling agent. The oil component may be present in an amount ranging from 0.01% to 50% by weight, preferably 0.1% to 30% by weight, based on the total weight of the granular gel food. In one example, the oil component may comprise a single type of polyunsaturated fatty acid (PUFA), a salt thereof, or an ester thereof, or a combination of two or more of these forms. For example, the oil component may be a mixture of a PUFA and a PUFA ester, or a blend of PUFA salts and esters.

As used herein, the term "gelling agent" refers to a substance that enables the formation of a gel-like structure by thickening or solidifying the aqueous or oil phase of the food composition. Gelling agents are typically polymers that can form three-dimensional networks, trapping water or oil to produce a semi-solid texture. Suitable gelling agents include, but are not limited to, natural polysaccharides such as agar, carrageenan, pectin, gellan gum, xanthan gum, and alginates, as well as proteins such as gelatin. Synthetic or semi-synthetic gelling agents like carboxymethyl cellulose (CMC) or hydroxypropyl methylcellulose (HPMC) may also be used. The type and amount of the gelling agent can be selected depending on the desired hardness, elasticity, and mouthfeel of the granular gel food. The gelling agent plays a key role in stabilizing the structure of the granules and in encapsulating the oil component, particularly polyunsaturated fatty acids (PUFAs), thereby enhancing the stability and functionality of the product.

According to an example, the PUFA comprises eicosapentaenoic acid (EPA) or docosahexaenoic acid (DHA). The PUFA may also include linoleic acid, alpha-linolenic acid, or other long-chain polyunsaturated fatty acids. The esters may include ethyl esters, triglycerides, or other physiologically acceptable forms. The salts may include alkali metal or alkaline earth metal salts.

In an example, the PUFA, salt thereof or ester thereof includes an ethyl ester of the PUFA.

In an example, the PUFA, salt thereof or ester thereof is an ethyl ester of the PUFA.

In an example, a content of the gelling agent is 5.00% by weight to 15.00% by weight, based on a total weight of the granular gel food. Suitable gelling agents may include gelatin, agar, pectin, carrageenan, starch, alginate, or combinations thereof.

The gelling agent may be present in an amount ranging from about 1% to 30% by weight, preferably 5-15% by weight.

[1-2] The granular gel food according to [1-1], wherein a content of the oil component is 1.0% by weight to 15.0% by weight, based on a total weight of the granular gel food.

[1-3] The granular gel food according to [1-1] or [1-2], wherein the oil component is derived from fish oil.

[1-4] The granular gel food according to any one of [1-1] to [1-3], wherein, the PUFA includes EPA or DHA or a combination thereof.

[1-5] The granular gel food according to any one of [1-1] to [1-4], wherein the PUFA, a salt thereof or an ester thereof is a free fatty acid, a triglyceride, a diglyceride, a monoglyceride, a $C_{1-6}$ alkyl ester, a cholesterol ester or a sphingosine ester of the PUFA, or any combination thereof. In an example, the PUFA, a salt thereof or an ester thereof includes any of a free fatty acid, a triglyceride, a diglyceride, a monoglyceride, a $C_{1-6}$ alkyl ester, a cholesterol ester or a sphingosine ester of the PUFA.

[1-6] The granular gel food according to any one of [1-1] to [1-5], wherein the PUFA, a salt thereof or an ester thereof is an ethyl ester of the PUFA.

[1-7] The granular gel food according to any one of [1-1] to [1-6], wherein the content of the gelling agent is 5.0% by weight to 15.0% by weight, based on the total weight of the granular gel food.

[1-8] The granular gel food according to any one of [1-1] to [1-7], wherein the gelling agent is selected from gelatin, pectin, carrageenan, agar and starch.

[1-9] The granular gel food according to any one of [1-1] to [1-8], wherein the gelling agent is gelatin. According to an example, the gelling agent includes gelatin.

[1-10] The granular gel food according to any one of [1-1] to [1-7] and [1-9], wherein the granular gel food contains no pectin. In such an example, gelling agent is selected from gelatin, carrageenan, agar and starch.

[1-11] The granular gel food according to any one of [1-1] to [1-10], wherein the granular gel food further contains an emulsifying agent, wherein the content of the emulsifying agent is 0.5% by weight to 1.5% by weight, based on the total weight of the granular gel food. The content of the emulsifying agent may be in the range of 0.1-3%, preferably, 0.2-1.2%, preferably, 0.5-1.5% by weight, based on the total weight of the granular gel food.

[1-12] The granular gel food according to [1-11], wherein the emulsifying agent includes a glycerol fatty acid ester represented by the following formula I:

$$R^1\text{-}O\text{-}(CH_2\text{-}CH(OR^2)\text{-}CH_2O)_n\text{-}R^3 \qquad (I)$$

wherein:

$R^1$ and $R^3$ are each independently a hydrogen atom or $-(CO)R^4$;
$R^2$ is each independently a hydrogen atom or $-(CO)R^4$;
at least one of $R^1$, $R^2$ and $R^3$ is $-(CO)R^4$;
$R^4$ is each independently a $C_{12\text{-}20}$ alkyl or $C_{12\text{-}20}$ alkenyl;
the $C_{12\text{-}20}$ alkenyl contains one or two or more double bonds; and
n is an integer selected from 1 to 20.

These glycerol esters act as emulsifying agents, enabling the stable dispersion of the oil component (PUFAs or their esters) within the aqueous or gel matrix. They serve the same technical function across the disclosed embodiments, stabilizing the oil droplets, enhancing product uniformity, and improving the physical stability of the granular gel structure.

Examples of emulsifying agents according to Formula I include, but are not limited to:

Glycerol monolinoleate
(R4 = linoleyl, a C18:2 alkenyl group; monoester on R1)
Glycerol monostearate
(R4 = stearyl, a saturated C18 alkyl group; monoester on R1)
Glycerol dioleate
(R4 = oleyl, a C18:1 alkenyl group; esters on R1 and R3)
Polyglyceryl-10 monolaurate
(n = 10; R4 = lauryl, a C12 alkyl group; monoester on R2)

Particularly preferred emulsifying agents may be mono- and diesters of glycerol or polyglycerols (n = 1 to 10) with C16-C18 fatty acids or fatty acid mixtures, such as stearic acid, oleic acid, or linoleic acid.

Increasing n (degree of polymerization) enhances hydrophilicity and may increase water solubility or raise the HLB value.

[1-13] The granular gel food according to [1-12], wherein $-(CO)R^4$ is selected from the group consisting of myristoyl, stearoyl, palmitoyl, lauroyl and oleoyl. $-(CO)R^4$ may comprise any of myristoyl, stearoyl, palmitoyl, lauroyl and oleoyl or other components.

[1-14] The granular gel food according to [1-12] or [1-13], wherein the glycerol fatty acid ester represented by formula I contains, as a constituent fatty acid, a fatty acid selected from the group consisting of myristic acid, stearic acid, palmitic acid, lauric acid and oleic acid. The glycerol fatty acid ester may contain any of a fatty acid selected from the group consisting of myristic acid, stearic acid, palmitic acid, lauric acid and oleic acid, as a constituent fatty acid, or other compounds.

[1-15] The granular gel food according to any one of [1-12] to [1-14], wherein the average degree of polymerization of the glycerol fatty acid ester represented by formula I is 6 to 15.

[1-16] The granular gel food according to [1-15], wherein the glycerol fatty acid ester represented by formula I is a decaglycerol fatty acid ester. In one example, the glycerol fatty acid ester represented by formula I may include a decaglycerol fatty acid ester.

[1-17] The granular gel food according to [1-15], wherein the glycerol fatty acid ester represented by formula I is selected from decaglyceryl oleate, decaglyceryl pentaoleate, polyglyceryl myristate and polyglyceryl stearate.

In one example, the glycerol fatty acid ester represented by formula I may be selected from decaglyceryl oleate, decaglyceryl pentaoleate, polyglyceryl myristate and polyglyceryl stearate.

[1-18] The granular gel food according to [1-15], wherein the granular gel food contains no sucrose myristate, sucrose stearate, sucrose palmitate, sucrose laurate or sucrose oleate as the emulsifying agent.

[1-19] The granular gel food according to any one of [1-11] to [1-17], wherein the granular gel food contains no sucrose fatty acid ester as the emulsifying agent.

[1-20] The granular gel food according to any one of [1-11] to [1-19], wherein an HLB value of the emulsifying agent is 0 to 10, 10 to 20, 5 to 15, 5 to 10, 10 to 15, 5 to 9, 8 to 16, 9 to 11, or 11 to 15.

[1-21] The granular gel food according to any one of [1-1] to [1-20], wherein the granular gel food further contains a fruit-derived component, wherein the content of the fruit-derived component is 1.0% by weight to 5.0% by weight, based on the total weight of the granular gel food. The content of the fruit-derived may be in the range of 0.1-10 %wt, preferably 0.5-8wt% by weight, based on the total weight of the granular gel food.

[1-22] The granular gel food according to any one of [1-1] to [1-21], wherein the granular gel food further contains water, wherein a content of the water is 10.0% by weight to 60.0% by weight, based on a total weight of the granular gel food. In this example, the content of the water may fall in the range of 5-80% by weight, preferably 5-70%, preferably 10-60 by weight.

[1-23] The granular gel food according to any one of [1-1] to [1-22], wherein the granular gel food further contains a carbohydrate, wherein the carbohydrate includes sugar and liquid sugar, and a content of the carbohydrate is 10.0% by weight to 70.0% by weight, based on a total weight of the granular gel food. The content of the carbohydrate may be in the range of 5-80% by weight, preferably 5-70%, preferably 10-70 by weight.

[1-24] The granular gel food according to any one of [1-1] to [1-23], wherein the granular gel food further contains an antioxidant, wherein a content of the antioxidant is 0.05% by weight to 2.0% by weight, based on a total weight of the granular gel food.

[1-25] The granular gel food according to [1-24], wherein the antioxidant is L-ascorbic acid. The antioxidant may include L- ascorbic acid or other components. The content of the antioxidant may be in the range of 0.01-5%, preferably 0.02-3 %, preferably 0.05-2% by weight.

[1-26] The granular gel food according to any one of [1-1] to [1-25], wherein the granular gel food further contains, based on a total weight thereof,

  1.00% by weight to 15.00% by weight of fish oil;
  5.00% by weight to 15.00% by weight of gelatin;
  0.50% by weight to 1.50% by weight of decaglycerol oleate;
  1.00% by weight to 5.00% by weight of a fruit juice;
  2.00% by weight to 40.00% by weight of water;
  5.00% by weight to 50.00% by weight of sugar;
  5.00% by weight to 50.00% by weight of liquid sugar; and
  0.05% by weight to 2.00% by weight of L-ascorbic acid.

Please note that the granular gel food may include one or more of the above listed compounds, and not necessarily all of them together. Different amounts of such compound may be provided, indeed the above-mentioned percentages are only an example of the content of each compound in the granular gel food.

[1-27] The granular gel food according to any one of [1-1] to [1-26], wherein the granular gel food is a gummy. In this context, the word "gummy" refers to a soft, chewy, gel-based confection or supplement , much like a gummy bear or gummy vitamin.

[1-28] The granular gel food according to any one of [1-1] to [1-27], wherein a peroxide value of the granular gel food is 10 meq/kg or less.

[1-29] The granular gel food according to any one of [1-1] to [1-28], wherein a peroxide value of the granular gel food immediately after production thereof or after storage at 25°C for 3 days or more after production thereof is 10 meq/kg or less.

According to one example, the peroxide value of the granular gel food composition is maintained at 10 meq/kg or less immediately after production or after storage at 25 °C for 3 days or more. This may be achieved by incorporating one or more of the following features: the use of antioxidants (such as tocopherols, ascorbyl palmitate, BHA, or BHT), the inclusion of chelating agents (such as citric acid or EDTA), the use of oil encapsulation via gel matrices that physically limit oxidation, production under reduced oxygen or inert gas conditions, and/or storage in oxygen-impermeable containers. These features limit oxidative degradation of the polyunsaturated fatty acid (PUFA) components, thereby stabilizing the peroxide value over time.

[1-30] The granular gel food according to any one of [1-1] to [1-29], wherein no leakage of the oil component is observed immediately after production, after storage at 25°C for 30 days or more after production, or after storage at 25°C for 180 days or more after production.

[1-31] The granular gel food according to any one of [1-1] to [1-25] and [1-27] to [1-30], wherein an amount of the oil component converted to a corresponding PUFA free fatty acid is 0.1% by weight or more, based on a total weight of the granular gel food.

In the present invention, the "amount of the oil component converted to corresponding PUFA free fatty acid" refers to the proportion of PUFA moieties that are present in their free fatty acid form rather than in esterified form measured as a weight percentage based on the total weight of the granular gel food.

This conversion may occur either intentionally, via formulation or processing, or spontaneously, due to hydrolysis during manufacturing or storage. The following factors are known to influence this conversion:

pH, Temperature, moisture content, presence of enzymes, process time.

The composition of fatty acids in the sample, including polyunsaturated fatty acids (PUFAs), can be determined using any conventional analytical method. Typically, this involves preparing fatty acid lower alkyl esters (e.g., methyl esters) by esterifying free fatty acids using a lower alcohol (such as methanol) and an acid or base catalyst. This derivatization allows for efficient gas chromatography (GC) analysis.

When the fatty acids in the sample are already in the form of lower alkyl esters (e.g., PUFA methyl esters), derivatization is not required, and the sample may be used as-is for GC analysis. To quantify the amount of PUFA free fatty acid, a lipid extraction is first performed using a solvent such as chloroform/methanol or hexane. The extracted lipids are then subjected to methylation (if not already esterified), and the resulting fatty acid methyl esters (FAMEs) are analyzed by gas chromatography (GC). Alternatively, high-performance liquid chromatography (HPLC) may be used, depending on the analytical setup. The resulting PUFA free fatty acid content is expressed as weight percent relative to the total weight of the granular gel food..

Unless otherwise specified, the measurement is conducted on a sample taken immediately after production, stored at 25 °C under ambient humidity conditions for 3 days, with no added enzymes unless specified. This provides a standardized assessment of the degree of hydrolysis under normal conditions.

[1-32] The granular gel food according to any one of [1-1] to [1-25] and [1-27] to [1-31], wherein an amount of the EPA and DHA contained in the oil component converted to a corresponding EPA free fatty acid and DHA free fatty acid, is 0.1% by weight or more, based on a total weight of the granular gel food.

[1-33] The granular gel food according to any one of [1-1] to [1-32], wherein an amount of oil component contained in one piece of the granular gel food converted to a corresponding PUFA free fatty acid, is 50 mg or more.

[1-34] The granular gel food according to any one of [1-1] to [1-33], wherein an amount of EPA and DHA contained in one piece of the granular gel food converted to a corresponding PUFA free fatty acid, is 50 mg or more. The amount of EPA and DHA contained in one piece of the granular gel food converted to a corresponding PUFA free fatty acid, may be 30 mg or more.

[1-35] The granular gel food according to any of [1-1] to [1-34], wherein a weight of one piece of the granular gel food is 2 g or more and 6 g or less. The weight of one piece of the granular gel food may be 1 g or more and 10 g or less.

[2-1] A method for producing a granular gel food containing a PUFA, including:

(1) mixing the PUFA, a salt thereof or an ester thereof with a gelling agent to obtain a mixture; and
(2) gelling the mixture obtained in step (1) to obtain the granular gel food.

[2-2] The method according to [2-1], including, prior to step (1), (3) mixing the PUFA, salt thereof or ester thereof with an emulsifying agent to obtain a mixture.

[2-3] The method according to [2-2], wherein an HLB value of the emulsifying agent is less than 16. As used herein, the term 'HLB value' refers to the Hydrophilic-Lipophilic Balance of an emulsifying agent. The HLB value is a numerical scale, typically ranging from 0 to 20, that reflects the relative balance between the hydrophilic (water-attracting) and lipophilic (oil-attracting) portions of a surfactant molecule.

In the context of the present invention, the HLB value is used to select emulsifying agents that are capable of effectively dispersing and stabilizing the oil component, particularly PUFAs, within the gel matrix of the granular gel food.

The HLB value of an emulsifier is typically determined using the Griffin method or other known techniques, and values are generally provided by ingredient suppliers or determined experimentally. Unless otherwise specified, HLB values referred to herein are understood as those established or reported using standard methods in the art. The HLB value may be less than 18, preferably less than 16, preferably between the range of - and 15, preferably between 4 and 12.

[2-4] The method according to any one of [2-1] to [2-3], wherein the mixing in step (1) or step (3) is carried out at a stirring speed of 1000 rpm or less, 300 rpm, 100 rpm or less, or 60 rpm or less.

[2-5] The method according to any one of [2-1] to [2-4], wherein the mixing in step (1) is carried out under gas displacement or under reduced pressure in a vessel for carrying out the mixing.

[2-6] The method according to any one of [2-2] to [2-4], wherein the mixing in step (3) is carried out under gas displacement or under reduced pressure in a vessel for carrying out the mixing.

[2-7] The method according to any one of [2-1] to [2-6], wherein the granular gel food is stored at room temperature for 2 days or more after the gelling in step (2).

[2-8] The method according to [2-7], wherein the storing is carried out in a shielded container or under light protection.

[2-9] The method according to any one of [2-1] to [2-8], wherein the granular gel food is the granular gel food according to any one of [1-1] to [1-35].

[2-10] A granular gel food obtained by the method for producing a granular gel food according to any one of [2-1] to [2-9].

[3-1] A method for producing a granular gel food containing PUFA, including:

(1)obtaining a solution, of an emulsifying agent and a gelling agent, in which the emulsifying agent and the gelling agent are dissolved in an amphiphilic solvent;

(2) mixing the PUFA, a salt thereof or an ester thereof with an emulsifying agent gel solution to obtain a mixture; and

(3) gelling the mixture obtained in step (2) to obtain a granular gel food.

[3-2] The method according to [3-1], wherein in step (1), the gelling agent is added to the amphiphilic emulsifying agent solution in which the emulsifying agent is dissolved in the amphiphilic solvent to prepare the solution of emulsifying agent and gelling agent.

[3-3] The method according to [3-1] or [3-2], wherein the amphiphilic solvent is ethanol. In one example, the amphiphilic solvent includes ethanol. In another example, the amphiphilic solvent may include isopropanol and/or propylene glycol.

[3-4] The method according to any one of [3-1] to [3-3], wherein an HLB value of the emulsifying agent is 8 or more and 16 or less. In one example, the HLB value of the emulsifying agent is 5 or more and 15 or less. Preferably, the HLB value of the emulsifying agent is 7.

[3-5] The method according to any one of [3-1] to [3-3], wherein an HLB value of the emulsifying agent is more than 10.

[3-6] The method according to any one of [3-1] to [3-5], wherein the mixing in step (1) or step (2) is carried out at a stirring speed of 1000 rpm or less, 300 rpm, 100 rpm or less, or 60 rpm or less.

[3-7] The method according to any one of [3-1] to [3-6], wherein the mixing in step (1) or step (2) is carried out under gas displacement or under reduced pressure in a vessel. In one example, mixing under gas displacement or under reduced pressure in a vessel may be applied in combination with each other.

[3-8] The method according to any one of [3-1] to [3-7], wherein the granular gel food is stored at room temperature for 2 days or more after the gelling in step (3).

[3-9] The method according to [3-8], wherein the storing is carried out in a shielded container or under light protection.

[3-10] The method according to any one of [3-1] to [3-9], wherein the granular gel food is the granular gel food according to any one of [1-1] to [1-35].

[3-11] A granular gel food obtained by the method for producing a granular gel food according to any one of f [3-1] to [3-10].

[3-12] The method according to any one of [3-1] to [3-10], wherein a ratio of the gelling agent to the emulsifying agent in the solution of the emulsifying agent and the gelling agent obtained in step (1) is 1:3 to 3:1.

[4-1] A mixture obtained by mixing a PUFA, a salt thereof, or an ester thereof with a gelling agent in the method for producing a granular gel food according to any one of [2-1] to [2-9].

[4-2] An emulsifying agent composition obtained by mixing a PUFA, a salt thereof, or an ester thereof with an emulsifying agent in the method for producing a granular gel food according to any one of [2-2] to [2-9].

[4-3] The emulsifying agent composition according to [4-2], wherein a ratio of the oil component to the emulsifying agent is 1:3 to 3:1, and a total content of the oil component and the emulsifying agent is 50% by weight or more, based on a total weight of the emulsifying agent composition. In one example, the total content of the oil component and the emulsifying agent may be 30% by weight or more, preferably 40% or more, preferably 50% or more based on a total weight of the emulsifying agent composition.

[4-4] An emulsifying agent composition containing an oil component and an emulsifying agent, wherein the oil component is a polyunsaturated fatty acid (PUFA), a salt thereof or an ester thereof, a ratio of the oil component to the emulsifying agent is 1:3 to 3:1, and a total content of the oil component and the emulsifying agent is 50% by weight or more, based on a total weight of the emulsifying agent composition. In one example, the total content of the oil component and the emulsifying agent may be 30% by weight or more, preferably 40% or more, preferably 50% or more based on a total weight of the emulsifying agent composition.

[4-5] The emulsifying agent composition according to any one of [4-2] to [4-4], which is obtained as an intermediate in the method for producing a granular gel food according to any one of [2-2] to [2-9].

[4-6] An emulsifying agent composition containing a gelling agent and an emulsifying agent, wherein a ratio of the gelling agent to the emulsifying agent is 1:3 to 3:1, and a total content of the gelling agent and the emulsifying agent is 50% by weight or more, based on a total weight of the emulsifying agent composition. In one example, the total content of the oil component and the emulsifying agent may be 30% by weight or more, preferably 40% or more, preferably 50% or more based on a total weight of the emulsifying agent composition.

[4-7] The emulsifying agent composition according to [4-5], wherein the emulsifying agent is a decaglycerol fatty acid ester. In an example, the emulsifying agent includes a decaglycerol fatty acid ester

[4-8] The emulsifying agent composition according to [4-5] or [4-6], wherein an HLB of the emulsifying agent is 8 or more and 16 or less. In an example, the HLB of the emulsifying agent is 5 or more and 15 or less. Preferably, the HLB value of the emulsifying agent is 7.

[4-9] The emulsifying agent composition according to any one of [4-6] to [4-8], which is obtained by mixing the emulsifying agent with an amphiphilic solvent and water, followed by warming and mixing the emulsifying agent with the gelling agent.

[4-10] The emulsifying agent composition according to [4-8], wherein the amphiphilic solvent is ethanol. In an example, amphiphilic solvent includes ethanol.

[4-11] The emulsifying agent composition according to any one of [4-6] to [4-10], which is obtained as an intermediate in the method for producing a granular gel food according to any one of [3-1] to [3-10].

Please note that the present application includes separate aspects regarding a method for producing a granular gel food comprising a PUFA, directed to alternative technical solutions for producing a stable granular gel food containing polyunsaturated fatty acids (PUFAs), wherein both methods aim to solve the same technical problem, namely, the suppression of unpleasant odors (such as fishy or raw smells) and prevention of oil leakage caused by PUFA degradation during heat processing and storage.

One aspect achieves this by directly mixing the PUFA with a gelling agent, while the other aspect achieves the same objective via a different approach, wherein the PUFA is mixed into a preformed emulsifying agent and gelling agent solution, which may offer improved dispersion and encapsulation of the PUFA.

These two methods represent alternative solutions that are not merely minor variations but are based on distinct processing strategies.

Similarly, the present application provides separate aspects each representing a distinct composition designed to address the same technical problem.

One aspect regards a gelling agent + emulsifying agent while the other aspect regards PUFA + emulsifying agent. These compositions differ substantially in structure, function, and application timing.

ADVANTAGEOUS EFFECTS OF INVENTION

According to one aspect of the present invention, a stable granular gel food which has a good flavor and a suppressed leakage of oil components can be provided.

DESCRIPTION OF EMBODIMENTS

According to one aspect of the present invention, the granular gel food is a granular gel food containing an oil component and a gelling agent, wherein the oil component is a polyunsaturated fatty acid (PUFA), a salt thereof or an ester thereof, and the content of the oil component is 0.1% by weight or more, based on the total weight of the granular gel food.

According to one aspect of the present invention, the granular gel food is a granular gel food containing an oil component and a gelling agent, wherein the oil component is a polyunsaturated fatty acid (PUFA), a salt thereof or an ester thereof, and the content of the oil component is 0.1% by weight or more, based on the total weight of the granular gel food and the peroxide value (POV) is 10 meq/kg or less.

According to one aspect of the present invention, the granular gel food is a granular gel food containing an oil component and a gelling agent, wherein the oil component is a polyunsaturated fatty acid (PUFA), a salt thereof or an ester thereof, and the content of the oil component is 0.1% by weight or more, based on the total weight of the granular gel food and no leakage of the oil component is observed immediately after the production, after storage at 25°C for 30 days or more after the production, or after storage at 25°C for 180 days or more after the production.

According to one aspect of the present invention, the method for producing a granular gel food is a method for producing a granular gel food containing a PUFA including: (1) a step of mixing the PUFA, a salt thereof or an ester thereof with a gelling agent to obtain a mixture; and (2) a step of gelling the mixture obtained in step (1) to obtain the granular gel food (production method 1).

According to one aspect of the present invention, the method for producing a granular gel food is a method for producing a granular gel food containing a PUFA including: (1) a step of mixing the PUFA, a salt thereof or an ester thereof with a gelling agent to obtain a mixture; (2) a step of gelling the mixture obtained in step (1) to obtain the granular gel food;

and prior to step (1), (3) a step of mixing the PUFA, salt thereof or ester thereof with an emulsifying agent to obtain a mixture, wherein the mixing in step (1) or step (3) is carried out at a stirring speed of 1000 rpm or less, 300 rpm or less, 100 rpm or less, or 60 rpm or less.

According to one aspect of the present invention, the method for producing a granular gel food is a method for producing a granular gel food containing a PUFA including: (1) obtaining a solution, of an emulsifying agent and a gelling agent, in which the emulsifying agent and the gelling agent are dissolved in an amphiphilic solvent; (2) mixing a PUFA, a salt thereof or an ester thereof with an emulsifying agent gel solution to obtain a mixture; and (3) gelling the mixture obtained in step (2) to obtain the granular gel food containing the PUFA; wherein in step (1), the gelling agent is added to the amphiphilic emulsifying agent solution in which the emulsifying agent is dissolved in the amphiphilic solvent to prepare the solution of the emulsifying agent and the gelling agent (production method 2).

The content percentage of fatty acids in a composition as used herein is determined based on the composition of fatty acids, unless otherwise specified. The composition of fatty acids can be determined according to any conventional method. Specifically, when the fatty acid to be measured in the composition is other than a fatty acid lower alkyl ester, a fatty acid lower alkyl ester obtained by esterifying the fatty acid to be measured, using a lower alcohol and a catalyst, is used for determination of the composition of fatty acids. When the fatty acid to be measured in the composition is a fatty acid lower alkyl ester, the fatty acid to be measured is used as it is. Then, the obtained fatty acid lower alkyl ester is used as a sample and subjected to analysis by gas chromatography. In the obtained gas chromatogram chart, the peak corresponding to each fatty acid is identified, and the peak area of each fatty acid is determined using the Agilent ChemStation integration algorithm (revision C.01.03[37], Agilent Technologies). The peak area is the proportion (area %) of the peak area of each component to the total peak area in the chart obtained by subjecting fat and oil containing various fatty acids as constituents to analysis by gas chromatography, thin layer chromatography/hydrogen flame ionization detector (TLC/FID), or the like, and represents the content percentage of the component corresponding to the peak. The value by area % obtained by the above-described measurement method can be considered to be the same as and used interchangeably with the value by weight % of each fatty acid based on the total weight of fatty acids in the sample. See the Standard Methods for the Analysis of Fats, Oils and Related Materials, 2013 Edition established by the Japan Oil Chemists' Society (JOCS), 2.4.2.1-2013 Composition of Fatty Acids (FID Constant Temperature Gas Chromatography) and 2.4.2.2-2013 Composition of Fatty Acids (FID Temperature Rising Gas Chromatography). In the present specification, it is expressed as "% by weight" for convenience.

As used herein, the term "step" refers not only to an independent step, but even a step that cannot be clearly distinguished from other steps as long as the step achieves the desired effect of the step. As used herein, the description "- (to)" used to express a numerical range indicates a range that includes the numerical values described before and after it as the minimum and maximum values, respectively.

When multiple substances corresponding to each component are present in the composition, the amount of each component in the composition as used herein means the total amount of the multiple substances present in the composition, unless otherwise specified. As used herein, the term "not more than" or "less than" used with respect to a percentage means a range including 0% or a value that is undetectable by current means, unless a lower limit is specifically stated. Unless otherwise specified, each numerical value disclosed in the present specification is a value obtained by rounding off when one or more digits less than the significant figure are included.

[Granular gel food]

In one embodiment of the present invention, the granular gel food is a gel-like material composed of a gel matrix containing carbohydrate, gelatin and an emulsifying agent. The emulsified granular gel food in one embodiment of the present invention is an oil-in-water emulsion in which an oil component containing a PUFA such as DHA or EPA is emulsified in the gel matrix by an emulsifying agent and gelatin. The oil-in-water emulsion is an emulsion in which oil droplets are dispersed in a water-based matrix, and the granular gel food of the present invention, which contains oil in a gelatin gel matrix, is an oil-in-water emulsion. For example, when the granular gel food is dissolved in water of an ordinary temperature to 50°C, it can be confirmed that the granular gel food is an oil-in-water emulsion if it can be visually observed that a cloudy, homogeneous suspension is formed.

According to one aspect of the present invention, the "granular gel food" means a granular gel food that can be taken one piece at a time, and is, for example a gummy. In one aspect of the present invention, the weight of one piece of the gummy is 4 to 6 g.

In one embodiment of the present invention, the granular gel food has a Brix of 70% or more and 90% or less, 75% or more and 85% or less, or 80% or more and 85% or less.

As used herein, the polyunsaturated fatty acid (PUFA) means a PUFA that has 20 or more carbon atoms and a valence of two or more. Examples thereof include a PUFA having 20 or more and 22 or less carbon atoms. Specific examples of the PUFA include eicosatetraenoic acid (ETA) (C20:4, n-3), eicosapentaenoic acid (EPA) (C20:5, n-3), docosapentaenoic acid (DPAn-3) (C22:5, n-3), and docosahexaenoic acid (DHA) (C22:6, n-3). These can be used alone or in combination of two or more thereof.

According to one aspect of the present invention, the PUFA-containing oil contains DHA, EPA or a combination thereof from the viewpoint of the desired functionality. In one embodiment of the present invention, when the PUFA-containing oil contains DHA, EPA or a combination thereof, the PUFA-containing oil may further contain at least one selected from the group consisting of other polyunsaturated fatty acids and other polyunsaturated fatty acids.

The oil component in one embodiment of the present invention is derived from at least one biological oil selected from the group consisting of a fish oil and a microbial oil. The fish oil and microbial oil may contain a high content percentage of PUFA. The biological oil means one obtained from a biomass source. The biological oil may be a biological oil derived from a genetically modified organism. The term "biomass" refers to an aggregate or mass of individuals or cells, at a given time, which has grown in a given area or ecosystem. In addition to the fish oil and microbial oil, the PUFA-containing oil may also contain a raw marine oil derived from crustaceans or marine animal as described below.

Examples of the fish oil include fats and oils, and lipids such as phospholipids and wax esters, contained in fish. Examples of the fish oil include oils derived from fish such as herring, sardine, anchovy, menhaden, pilchard, saury, tuna, bonito, hake, catfish, capelin, redfish, whitefish, mackerel, jackmackerel, yellowtail, sandeel, pout, salmon, pollock, cod, halibut, trout, bluewhitening, sprat, shark and dogfish, and mixtures of these oils.

Examples of the microbial oil include fats and oils, and lipids such as phospholipids and wax esters, contained in microorganisms. The microorganisms may be lipid-producing microorganisms or microorganisms capable of producing lipids, and examples thereof include algae, true fungi, bacteria, fungi and a stramenopile.

Examples of algae include the genera Labyrinthulomycota and Thraustochytrium.

Examples of true fungi include the genera Yarrowia, Candida, Saccharomyces, Schizosaccharomyces and Pichia.

Examples of bacterium include Agrobacterium, Bacillus, Escherichia, Pseudomonas and Actinomyces.

Examples of fungi include at least one selected from the group consisting of the genera Mortierella, Conidiobolus, Pythium, Phytophthora, Penicillium, Cladosporium, Mucor, Fusarium, Aspergillus, Rhodotorula, Entomophthora, Echinosporangium and Saprolegnia. Among these, microorganisms belonging to the genus Mortierella are more preferred. Examples of the microorganisms belonging to the genus Mortierella include microorganisms belonging to the subgenus Mortierella, such as Mortierella elongata, Mortierella exigua, Mortierella hygrophila and Mortierella alpina.

In one embodiment of the present invention, the "oil component" refers to a PUFA, a salt thereof or an ester thereof, and specifically a free fatty acid, triglyceride, diglyceride, monoglyceride, $C_{1-6}$ alkyl ester, cholesterol ester or sphingosine ester of a PUFA.

The free fatty acid of a PUFA is a PUFA, in the form of a free fatty acid, which has 20 or more carbon atoms and a valence of two or more. For example, it is a PUFA having 20 or more and 22 or less carbon atoms in the form of a free fatty acid. Specific examples thereof include ETA, EPA, DPAn-3 and DHA, in the form of a free fatty acid, and it is preferably EPA or DHA in the form of a free fatty acid. In one aspect of the present invention, the free fatty acid of a PUFA is obtained by hydrolysis of a raw material oil.

Any triglyceride, diglyceride or monoglyceride of a PUFA is a fatty acid ester of glycerol that contains a PUFA as a constituent fatty acid. The triglyceride has three molecules of fatty acid ester-bonded to one molecule of glycerol. The diglyceride has two molecules of fatty acid ester-bonded to one molecule of glycerol. The monoglyceride has one molecule of fatty acid ester-bonded to one molecule of glycerol. Examples of the constituent fatty acid include ETA, EPA, DPAn-3 and DHA, and it is preferably EPA or DHA. The binding positions of the fatty acid are classified into sn1, sn2 and sn3 positions by the stereospecifically numbered system based on the Fischer projection of the glycerol skeleton. The binding position of the constituent fatty acid is not particularly limited.

The $C_{1-6}$ alkyl ester of a PUFA is a methyl ester, an ethyl ester, a propyl ester, a butyl ester, a pentyl ester or a hexyl ester of a PUFA. It is preferably an ethyl ester of a PUFA such as an ethyl ester of EPA or DHA.

The cholesterol ester of a PUFA is obtained by esterifying cholesterol with the PUFA. Examples of the PUFA include ETA, EPA, DPAn-3 and DHA, and it is preferably EPA or DHA.

The sphingosine ester of a PUFA is obtained by esterifying sphingosine with the PUFA. Examples of the PUFA include ETA, EPA, DPAn-3 and DHA, and it is preferably EPA or DHA.

In one embodiment of the present invention, the oil component can be 0.1% by weight or more, 0.2% by weight or more, 0.4% by weight or more, 1.0% by weight or more, or 1.5% by weight or more, based on the total weight of the granular gel food. The oil component can be 10.0% by weight or less, 5.0% by weight or less, 3.0% by weight or less, 1.0% by weight or less, or 0.5% by weight or less, based on the total weight of the granular gel food. The oil component can be present in an amount of 0.1% by weight to 10.0% by weight, 0.2% by weight to 5.0% by weight, or 0.4% by weight to 3.0% by weight, based on the total weight of the granular gel food. The higher the content percentage of PUFA in the granular gel food, the greater the benefit from the odor suppression effect.

The content of the oil component in the granular gel food can be obtained as the amount converted to the PUFA free fatty acid corresponding to the oil component.

In one embodiment of the present invention, "the amount of oil component converted to the corresponding PUFA free fatty acid" is the total weight of the free fatty acid of the PUFA, for the free fatty acid, triglyceride, diglyceride, monoglyceride, $C_{1-6}$ alkyl ester, cholesterol ester or sphingosine ester of the PUFA contained in the oil component. For components ester-bonded to the PUFA such as triglyceride, diglyceride, monoglyceride, $C_{1-6}$ alkyl ester, cholesterol ester or sphingosine ester, the weight of the components converted to free fatty acid is used. The proportion of the weight of the oil component converted to the corresponding PUFA free fatty acid to the weight of the granular gel food is calculated. The weight of the granular gel food is the weight of one piece of the granular gel food, for example, one piece of gummy.

In one embodiment of the present invention, the amount of the oil component converted to the corresponding PUFA free fatty acid is 0.1% by weight or more, 0.5% by weight or more, 1.0% by weight or more, 2.0% by weight or more, or 4.0% by weight or more, based on the total weight of the granular gel food.

In one embodiment of the present invention, the amount of EPA and DHA contained in the oil component converted to the corresponding EPA free fatty acid and DHA free fatty acid can be 0.1% by weight or more, 0.5% by weight or more, 1.0% by weight or more, 2.0% by weight or more, or 4.0% by weight or more, based on the total weight of the granular gel food. The amount of EPA and DHA contained in the oil component converted to the corresponding EPA free fatty acid and DHA free fatty acid can be 15.0% by weight or less, 10.0% by weight or less, 5.0% by weight or less, 3.0% by weight or less, or 1.0% by weight or less, based on the total weight of the granular gel food. The oil component can be present in an amount of 5% by weight to 20% by weight, 7% by weight to 18% by weight, or 10% by weight to 15% by weight, based on the total weight of the granular gel food.

In one embodiment of the present invention, the amount of oil component converted to the corresponding PUFA free fatty acid contained in one piece of granular gel food can be 30 mg or more, 50 mg or more, 100 mg or more, 150 mg or more, 200 mg or more, or 300 mg or more. The amount of oil component converted to the corresponding PUFA free fatty acid contained in one piece can be 800 mg or less, 500 mg or less, or 200 mg or less. The amount of oil component converted to the corresponding PUFA free fatty acid contained in one piece can be 30 mg to 800 mg, 50 mg to 500 mg, or 100 mg to 250 mg.

In one embodiment of the present invention, the amount of EPA and DHA converted to the corresponding EPA free fatty acid and DHA free fatty acid contained in one piece of granular gel food can be 30 mg or more, 50 mg or more, 100 mg or more, 200 mg or more, 400 mg or more, or 800 mg or more. The amount of EPA and DHA converted to the corresponding EPA free fatty acid and DHA free fatty acid contained in one piece can be 1000 mg or less, 500 mg or less, or 250 mg or less. The amount of EPA and DHA converted to the corresponding EPA free fatty acid and DHA free fatty acid contained in one piece can be 30 mg to 800 mg, 50 mg to 500 mg, or 100 mg to 200 mg.

In one aspect of the present invention, the gelling agent is selected from gelatin, pectin, carrageenan, agar and starch.

Gelatin is obtained by heating and denaturing collagen, a protein contained in large amounts in animal bones and skins, and is known to originate from a pig, a cow, fish, and the like.

In one aspect of the present invention, the content of gelatin in the granular gel food is not particularly limited as long as the gummy-like composition has a heat resistant shape retention at 50°C, and is, for example, 2.5% by weight to 20.0% by weight, 4.0% by weight to 15.0% by weight, or 5.0% by weight to 10.0% by weight, based on the total weight of the granular gel food.

In one aspect of the present invention, the gelling agent contains no pectin.

In one aspect of the present invention, examples of the emulsifying agent include a glycerol fatty acid ester represented by the following formula I:

$$R^1\text{-O-}(CH_2\text{-CH}(OR^2)\text{-CH}_2O)_n\text{-}R^3 \qquad (I)$$

wherein: $R^1$, $R^2$ and $R^3$ are each independently a hydrogen or $-(CO)R^4$;
at least one of $R^1$, $R^2$ and $R^3$ is $-(CO)R^4$;
$R^4$ is each independently a $C_{12-20}$ alkyl or $C_{12-20}$ alkenyl;
the $C_{12-20}$ alkenyl contains one or two or more double bonds; and
n is an integer selected from 1 to 20. $-(CO)R^4$ is selected from the group consisting of myristoyl, stearoyl, palmitoyl, lauroyl and oleoyl. The glycerol fatty acid ester represented by formula I contains, as a constituent fatty acid, a fatty acid selected from the group consisting of myristic acid, stearic acid, palmitic acid, lauric acid and oleic acid.

In one aspect of the present invention, the average degree of polymerization of the glycerol fatty acid ester represented by formula I is 6 to 15, 8 to 13, 9 to 11, or 10.

In one aspect of the present invention, the emulsifying agent is selected from decaglyceryl oleate, decaglyceryl pentaoleate, polyglyceryl myristate and polyglyceryl stearate.

The content of the emulsifying agent in the granular gel food of the present invention is not particularly limited as long as the granular gel food has a heat resistant shape retention at 50°C, and is, for example, 0.10% by weight to 2.50% by weight, 0.25% by weight to 2.00% by weight, or 0.50% by weight to 1.50% by weight, based on the total weight of the granular gel food.

In one aspect of the present invention, the emulsifying agent contains no sucrose myristate, sucrose stearate, sucrose palmitate, sucrose laurate or sucrose oleate. In one aspect of the present invention, the emulsifying agent contains no sucrose fatty acid ester.

In one aspect of the present invention, the HLB value of the emulsifying agent is less than 10 or more than 10. In one aspect of the present invention, the HLB value of the emulsifying agent is 0 to 10, 10 to 20, 5 to 15, 5 to 10, 10 to 15, 5 to 9, 8 to 16, 9 to 11, or 11 to 15. The HLB value is determined by the following general method:

$$HLB = 20 \times (1\text{-}S/A)$$

wherein:

A: acid value of fatty acid; and
S: saponification value of ester.

In one embodiment of the present invention, the emulsifying agent is dissolved in an amphiphilic solvent and mixed as an amphiphilic emulsifying agent solution with a gelling agent or an oil component.

In one embodiment of the present invention, the amphiphilic solvent is an alcohol, such as ethanol or propanol, and preferably ethanol.

In one aspect of the present invention, the fruit-derived product is obtained from a fruit and a fruit-derived component. Examples of fruit include strawberry, orange, mango, grape, white grape, and cherry.

More specific examples thereof include raw fruit, dried fruit obtained by drying fruit, fruit juice, pomace left after obtaining fruit juice, and fruit skin. Extracts obtained by extracting, with a solvent, raw fruit, dried fruit obtained by drying fruit, pomace left after obtaining fruit juice, and fruit skin are also included in the fruit-derived product. In addition, powder obtained by drying and optionally grinding fruit juice, pomace left after obtaining fruit juice, and fruit skin; and powder obtained by drying extracts obtained by extracting, raw fruit, dried fruit obtained by drying fruit, pomace left after obtaining fruit juice, fruit skin and the like, with a solvent, are used as the fruit-derived component in one embodiment of the present invention.

In one aspect of the present invention, the carbohydrate is the main constituent of the gel matrix.

In one aspect of the present invention, examples of the carbohydrate include a sugar, a granulated sugar, a liquid sugar, a starch syrup, glucose, fructose-glucose liquid sugar, reduced maltose, a reduced starch syrup, maltitol, sorbitol, xylitol, erythritol, trehalose, palatinose and reduced palatinose. These carbohydrates are not particularly limited and can be used alone or in combination of two or more thereof.

In one aspect of the present invention, the content of the carbohydrate in the granular gel food is, for example, 5.00% by weight to 60.00% by weight, 20.00% by weight to 75.00% by weight, or 10.00% by weight to 70.00% by weight, based on the total weight of the granular gel food.

In one aspect of the present invention, the granular gel food can contain an antioxidant to suppress the degradation of a PUFA. Examples of the antioxidant include vitamin C, vitamin E, a tea extract and a bayberry extract. In one aspect of the present invention, vitamin C, a tea extract, a bayberry extract, and the like can be used as a water-soluble antioxidant.

In one aspect of the present invention, the content of the antioxidant is 0.01% by weight to 10.00% by weight, 0.05% by weight to 4.00% by weight, or 0.30% by weight to 2.00% by weight, based on the total weight of the granular gel food.

In addition to the antioxidant, the granular gel food of the present invention may optionally contain an ingredient such as an organic acid, a coloring agent, a fat and oil, a sweetener, a stabilizer such as a polysaccharide, glycerol, a fruit juice, a dairy product, coffee, black tea, a plant extract, and a functional ingredient. A wide range of palatability can be imparted to the granular gel food by appropriately selecting these ingredients to adjust the physical properties and flavor.

In one aspect of the present invention, the content of water in the granular gel food of the present invention is an amount that is preferable for achieving heat resistant shape retention at 50°C, and is 2.00% by weight to 30.00% by weight, 3.00% by weight to 20.00% by weight, or 5.00% by weight to 15.00% by weight.

In one embodiment of the present invention, the granular gel food contains, based on the total weight thereof,

1.00% by weight to 15.00% by weight of fish oil,
5.00% by weight to 15.00% by weight of gelatin,
0.50% by weight to 1.50% by weight of decaglycerol oleate,
1.00% by weight to 5.00% by weight of a fruit juice,

2.00% by weight to 40.00% by weight of water,
5.00% by weight to 50.00% by weight of sugar,
5.00% by weight to 50.00% by weight of liquid sugar, and
0.05 to 2.00% by weight of L-ascorbic acid.

In one aspect of the present invention, the peroxide value (POV) of the PUFA-containing granular gel food may be 10 meq/kg or less. When the granular gel food is low POV-PUFA-containing granular gel food having a POV of 10 meq/kg or less, the odor peculiar to the source of the PUFA-containing granular gel food can be further suppressed and the suppressed odor can be stably maintained. The POV of the PUFA-containing granular gel food can be 7.0 meq/kg or less, 3.0 meq/kg or less, 2.0 meq/kg or less, or 1.0 meq/kg or less, from the viewpoint of the sustained odor suppression effect. The POV is determined according to the Standard Methods for the Analysis of Fats, Oils and Related Materials, 2013 Edition established by the Japan Oil Chemists' Society (JOCS), 2.5.2.1. The PUFA-containing granular gel food having a POV of 10 meq/kg or less can be obtained by a method for producing a granular gel food of the present invention. The method for producing a granular gel food of the present invention can include a given purification treatment including at least a deodorizing treatment. The lower limit of the POV is not particularly limited, and may be, for example, the detection limit in this determination method.

In one embodiment of the present invention, the POV of the granular gel food immediately after the production thereof or after storage at 25°C for 3 days or more after the production thereof is 10 meq/kg or less, 7.0 meq/kg or less, or 3.0 meq/kg or less.

In one embodiment of the present invention, no leakage of the oil component is observed immediately after the production, after storage at 25°C for 30 days or more after the production, or after storage at 25°C for 180 days or more after the production.

The PUFA-containing granular gel food is preferably a deodorized oil, from the viewpoint of the sustained odor suppression effect. Whether it is a deodorized oil can be confirmed by the fact that the deodorized oil has a suppressed odor by sensory evaluation or, in the case of commercial products, based on the product information.

[Method for producing granular gel food]

The present invention provides a method for producing a stable granular gel food which has a good flavor and has a suppressed leakage of oil components. The granular gel food of the present invention is required to stably hold a specific amount of oil component in the granular gel food without leakage. In one embodiment of the present invention, the oil component is homogeneously dispersed in a solution to achieve stable retention of the oil component. In one embodiment of the present invention, when the HLB value of an emulsifying agent is high, for example, the HLB value is more than 10, the emulsifying agent can be previously dissolved in an amphiphilic solvent, mixed with a gelling agent and then mixed with an oil component to obtain a granular gel food with low oil leakage. In one embodiment of the present invention, when the HLB value of an emulsifying agent is low, for example, the HLB value is less than 10, an oil component can be mixed with the emulsifying agent and then mixed with a gelling agent to obtain a granular gel food with less oil leakage. In one embodiment of the present invention, an oil component and an emulsifying agent can respectively be added separately to a gelling agent, without mixing the oil component and the emulsifying agent in advance, to obtain a granular gel food with less oil leakage.

The method for producing a granular gel food containing a PUFA (production method 1) in one embodiment of the present invention includes: (1) mixing the PUFA, a salt thereof or an ester thereof with a gelling agent to obtain a mixture; (2) gelling the mixture obtained in step (1) to obtain the granular gel food; and includes prior to step (1), (3) mixing the PUFA, salt thereof or ester thereof with an emulsifying agent to obtain a mixture; and optionally includes other step(s). In one aspect of the present invention, an intermediate 1 can be used as the mixture obtained in step (1) of production method 1.

The method for producing a granular gel food containing a PUFA (production method 2) in one embodiment of the present invention includes: (1) obtaining a solution, of an emulsifying agent and a gelling agent, in which the emulsifying agent and the gelling agent are dissolved in an amphiphilic solvent; (2) mixing the PUFA, a salt thereof or an ester thereof with an emulsifying agent gel solution to obtain a mixture; and (3) gelling the mixture obtained in step (2) to obtain the granular gel food; wherein in step (1), the solution of the emulsifying agent and the gelling agent is prepared by adding the gelling agent to the amphiphilic emulsifying agent solution having the emulsifying agent dissolved in the amphiphilic solvent. In one aspect of the present invention, the emulsifying agent is mixed with the amphiphilic solvent and water, followed by warming and mixing with the gelling agent. In one aspect of the present invention, an intermediate 2 can be used as the solution of the emulsifying agent and gelling agent obtained in step (1) of production method 2.

Both the mixing in step (1) or (3) of production method 1 of the present invention, and step (1) or (2) of production method 2 of the present invention are carried out until the entire mixture is homogeneous. Both the mixing in step (1) or (3) of production method 1 of the present invention, and step (1) or (2) of production method 2 of the present invention are carried out at a stirring speed of 1000 rpm or less, 300 rpm, 100 rpm or less, or 60 rpm or less. In one aspect of the present invention, the mixing is carried out by man power using a silicon spatula.

Both the mixing in step (1) or step (3) of production method 1 of the present invention, and step (1) or (2) of production method 2 of the present invention are carried out under gas displacement or under reduced pressure in a vessel for carrying out the mixing. In one aspect of the present invention, both the mixing in step (1) or step (3) of production method 1, and step (1) or (2) of production method 2 are carried out under a pressure of 10 MPa or less, 5 MPa or less, or 1 MPa or less, respectively. In one aspect of the present invention, the mixing in step (1) or step (3) of production method 1, and step (1) or (2) of production method 2 are carried out at 20°C or more, 40°C or more, or 80°C or more, and 120°C or less, 100°C or less, or 90°C or less, respectively. In one aspect of the present invention, the gases in the vessel, in which the mixing in step (1) or step (3) of production method 1 and the mixing in step (1) or step (2) of production method 2 are carried out, is displaced with nitrogen gas, respectively.

In one aspect of the present invention, the granular gel food is stored at room temperature for 2 days or more, 10 days or more, or 180 days or more after the gelling in step (2) of production method 1 or step (3) of production method 2. The granular gel food is stored in a shielded container or under light protection.

In one aspect of the present invention, the granular gel food obtained in step (2) of production method 1 or step (3) of production method 2 can be poured into a mold (such as a starch mold or a silicone mold) and dried to the desired moisture content to obtain a granular gel food having the desired shape.

Each of the obtained granular gel foods having various shapes may be removed from the mold, and the surface thereof may be optionally coated with a glazing agent or various saccharides.

Examples of the glazing agent include a vegetable wax such as carnauba wax, beeswax, shellac, and paraffin wax. Vegetable fats and oils may be used. Examples of the saccharide for the coating include a sugar, glucose, maltitol, sorbitol, xylitol, erythritol, trehalose, reduced palatinose, a powdered wafer, and starch.

The above-described mold is preferably a starch mold which has a high drying efficiency. The starch mold refers to a mold obtained by spreading cornstarch power all over a shallow, flat container and demolding it to create a concave.

The granular gel food of the present invention can be obtained in the above manner. The granular gel food of the present invention is easy to ingest even without water, and is suitable as a dietary supplement that can be easily ingested anywhere by anyone. In addition, DHA and/or EPA are emulsified in the gel matrix as an oil-in-water emulsion, and therefore, it is highly dispersible in water and is expected to be highly absorbable in the body.

[Emulsifying agent composition intermediate]

In one aspect of the present invention, an emulsifying agent composition containing an oil component and an emulsifying agent is obtained as an intermediate in the course of the method for producing a granular gel food (intermediate 1). Intermediate 1 is obtained by mixing a PUFA, a salt thereof or an ester thereof with a gelling agent in step (1) of production method 1. In one embodiment of the present invention, an emulsifying agent composition containing a gelling agent and an emulsifying agent is obtained as an intermediate in the course of the method for producing a granular gel food (intermediate 2). Intermediate 2 is obtained by adding the gelling agent to an amphiphilic emulsifying agent solution in which the emulsifying agent is dissolved in the amphiphilic solvent, in step (1) of production method 2. In one aspect of the present invention, the granular gel food is produced using intermediate 1 or 2 in the production method of the present invention. For example, intermediate 1 is used in production method 1, and intermediate 2 is used in production method 2.

In one aspect of the present invention, the ratio of a PUFA, a salt thereof or an ester thereof to an emulsifying agent in an emulsifying agent composition, for example, intermediate 1 is 1:3 to 3:1, 1:2.5 to 2.5:1, 1:2 to 2:1, or 1:1.5 to 1.5:1. In one embodiment of the present invention, the total content of an oil component and an emulsifying agent in intermediate 1 is 50% by weight or more, 60% by weight or more, 70% by weight or more, 80% by weight or more, or 90% by weight or more, based on the total weight of intermediate 1.

In one aspect of the present invention, the ratio of the gelling agent to the emulsifying agent in the emulsifying agent composition, for example, intermediate 2 is 1:3 to 3:1, 1:2.5 to 2.5:1, 1:2 to 2:1, or 1:1.5 to 1.5:1. In one embodiment of the present invention, the total content of the gelling agent and the emulsifying agent in intermediate 2 is 50% by weight or more, 60% by weight or more, 70% by weight or more, 80% by weight or more, or 90% by weight or more, based on the total weight of the intermediate 2.

In one aspect of the present invention, the emulsifying agent composition include a glycerol fatty acid ester represented by the following formula I:

$$R^1\text{-}O\text{-}(CH_2\text{-}CH(OR^2)\text{-}CH_2O)_n\text{-}R^3 \qquad (I)$$

wherein: $R^1$, $R^2$ and $R^3$ are each independently a hydrogen or $-(CO)R^4$;
at least one of $R^1$, $R^2$ and $R^3$ is $-(CO)R^4$;
$R^4$ is each independently a $C_{12\text{-}20}$ alkyl or $C_{12\text{-}20}$ alkenyl;

the $C_{12-20}$ alkenyl contains one or two or more double bonds; and
n is an integer selected from 1 to 20.

-(CO)$R^4$ is selected from the group consisting of myristoyl, stearoyl, palmitoyl, lauroyl and oleoyl. The glycerol fatty acid ester represented by formula I contains, as a constituent fatty acid, a fatty acid selected from the group consisting of myristic acid, stearic acid, palmitic acid, lauric acid and oleic acid.

In one aspect of the present invention, the average degree of polymerization of the glycerol fatty acid ester represented by formula I is 6 to 15, 8 to 13, 9 to 11, or 10.

In one aspect of the present invention, the emulsifying agent contained in the emulsifying agent composition is a decaglycerol fatty acid ester, and for example, is selected from decaglyceryl oleate, decaglyceryl pentaoleate, polyglyceryl myristate and polyglyceryl stearate.

In one aspect of the present invention, the HLB value of the emulsifying agent contained in the emulsifying agent composition is less than 10 or more than 10. In one aspect of the present invention, the HLB value of the emulsifying agent contained in the emulsifying agent composition is 0 to 10, 10 to 20, 5 to 15, 5 to 10, 10 to 15, 5 to 9, 8 to 16, 9 to 11, or 11 to 15. In one aspect of the present invention, the HLB of the emulsifying agent is 8 or more and 16 or less.

In one aspect of the present invention, the emulsifying agent composition, for example, intermediate 2 is obtained by mixing an emulsifying agent with an amphiphilic solvent and water, followed by warming and mixing with the gelling agent. In one aspect of the present invention, the amphiphilic solvent is an alcohol, such as ethanol or propanol, and preferably ethanol.

The main factors that prevent consumers from continuing to ingest commercially available dietary supplements every day include the consumers' tendency to find it troublesome or to forget. However, if the nutritional ingredients taste good when they are ingested, as the granular gel food of the present invention are, such factor is extremely advantageous in allowing the consumers to continue enjoying the ingestion of the dietary supplements every day.

EXAMPLES

Hereinafter, the present disclosure will be described in detail with reference to examples thereof. However, the present disclosure is not limited to the examples. Unless otherwise specified, "%" is on a mass (weight) basis. The HLB values of emulsifying agents used in the examples are published values from each respective manufacturer.

[Example 1a]

Fish oil and an emulsifying agent were mixed with different stirring methods, and differences in sensory evaluation and the POV of the resulting granular gel food were confirmed.

Gummies were produced using the following method, and sensory evaluation and POV analysis were carried out.

Fish oil was prepared from "DD Oil Type 2B-S" (manufactured by Nippon Suisan Kaisha, Ltd. (currently, Nissui Corporation)), which is a purified fish oil obtained from sardine oil as a raw material subjected to degumming, deacidification and decoloration, and concentration by enzyme-treatment with a lipase (enzyme) followed by molecular distillation, and subsequently subjected to deodorization by steam distillation, that had a POV og 0.1 meq/kg to 0.3 meq/kg. This fish oil contained the following components in the following compositional ratio: saturated fatty acids: 20% by weight or less, EPA: 28% by weight or more, DHA: 12% by weight or more, and n-3 polyunsaturated fatty acid: 50% by weight or more.

(1) Preparation of gelatin solution

29.4 g of gelatin (Gelatin APH-250; manufactured by Nitta Gelatin Inc.) was placed in a 200 ml vessel, and 70 ml of water of 25°C was added thereto, letting the gelatin to swell in water for 30 minutes. The swollen gelatin was placed in a hot water bath and allowed to stand for 10 minutes. Subsequently, the gelatin was dissolved in water while stirring at 50 rpm, and heated to 70°C for 5 minutes or less to obtain a gelatin solution.

(2) Preparation of sugar solution

76.3 g of liquid sugar (Corn Syrup H (65) 75C, manufactured by JAPAN CORN STARCH CO., LTD.) and 106.9 g of granulated sugar (granulated sugar manufactured by Mitsui Sugar Co., Ltd. (currently, Mitsui DM Sugar Co., Ltd.)) were placed in a 1000 ml vessel, and 160 ml of purified water was added thereto. The resulting mixture was heated to 100°C for 5 minutes or less to dissolve the liquid sugar and granulated sugar to obtain a sugar solution.

(3) Preparation of gel food solution

The entire amount of the sugar solution obtained in (2) was added to the entire amount of the gelatin solution obtained in (1), and mixed at a liquid temperature of 90°C for 2 minutes while stirring at 200 rpm until the entire mixture was homogeneous. A total of 22g of ascorbic acid, fruit juice and citric acid was added thereto, mixed at a liquid temperature of 80°C for 2 minutes until the entire mixture was homogeneous to obtain a gel food solution.

(4) Preparation of mixture of fish oil and emulsifying agent

Fish oil and an emulsifying agent were each heated in a hot water bath at 40°C before mixing. 32.1 ml of fish oil (DD Oil Type 2B-S, manufactured by Nissui Corporation) and 3.2 g of an emulsifying agent (RYOTO Polyglyester O-50D, manufactured by Mitsubishi Chemical Co., Ltd. (currently, Mitsubishi Chemical Group Corporation)) were measured into a circular vessel with a diameter of 15 cm and a depth of 10 cm. The mixture was mixed at a liquid temperature of 40°C for 5 minutes at 50 revolutions per minute until the entire mixture was homogeneous, using a 30 cm long silicone spatula along the edge of the circular vessel to avoid mixing in air bubbles, to obtain a mixture (liquid) of the fish oil and the emulsifying agent.

(5) Preparation of gummy

The entire amount of the gel food solution prepared in (3) was combined with the entire amount of the mixture of the fish oil and the emulsifying agent prepared in (4) and mixed at a liquid temperature of 75°C while stirring at 200 rpm until the entire mixture was homogeneous. The entire mixture was confirmed to be homogeneous since no unevenness in color or oil droplet was observed. Thereafter, the mixture was degassed at a liquid temperature of 70°C for 10 seconds × three times with a degassing device (small vacuum packaging machine, manufactured by Furukawa Manufacturing CO., Ltd.) while stirring at 200 rpm, to remove air bubbles. The entire mixture was confirmed to be homogeneous sinceno air bubbles were observed.

[Example 1b] Preparation of gummy without preparing mixture of fish oil and emulsifying agent

(1b) Step (1) was carried out in the same manner as in [Example 1a] above.
(2b) 10.7 g of an emulsifying agent solution (composition: a glycerol fatty acid ester 30%, water 65%, ethanol 5%; Ryoto Polyglyester O-50D, manufactured by Mitsubishi Chemical Co., Ltd.) was added to the sugar solution from step (2), and was mixed at a liquid temperature of 75°C while stirring at 200 rpm until it was homogeneous.
(3b) The entire amount of the sugar solution containing the emulsifying agent obtained in (2b) was added to the entire amount of the gelatin solution obtained in (1), and mixed at a liquid temperature of 90°C for 2 minutes while stirring at 200 rpm until the entire mixture was homogeneous. A total of 22g of ascorbic acid, fruit juice and citric acid were added thereto, and mixed at a liquid temperature of 80°C for 2 minutes until the entire mixture was homogeneous to obtain a gel food solution.
(4b) Fish oil was heated in a hot water bath at 40°C before mixingb

(5b) Preparation of gummy

The entire amount of the gel food solution prepared in (3b) and 32.1 ml of fish oil (DD Oil Type 2B-S, manufactured by Nissui Corporation) which had been warmed were combined and mixed at a liquid temperature of 75°C while stirring at 200 rpm until the entire mixture was homogeneous. The entire mixture was confirmed to be homogeneous by observing no unevenness in color and oil droplet. Thereafter, the mixture was degassed at a liquid temperature of 70°C for 10 seconds × three times with a degassing device (small vacuum packaging machine, manufactured by Furukawa Manufacturing CO., Ltd.) while stirring at 200 rpm, to remove air bubbles. The entire mixture was confirmed to be homogeneous since no air bubbles were observed.
Thereafter, gummies of 4g per piece were prepared according to a conventional method. For the method for preparing a gummy, reference may be made to, for example, Japanese Patent Laid-Open No. 2015-100304. The results are shown in Table 3.

(6) Measurement of POV of gummy

For the gummy prepared in (5), the gummy samples immediately after preparation, and the gummy samples that had been sealed and stored at 35°C under light protection for 2 weeks, 3 weeks or 4 weeks were each subjected to extraction according to a conventional method, and the POV of each of the extracts was measured. The extraction may include, for example, a step of homogenizing the sample in a solvent including a hydrophilic solvent, a lipophilic solvent and an amphiphilic solvent; a step of extracting an oil-soluble component with an organic solvent; and a step of washing with an aqueous salt solution. The extraction may be carried out, for example, by adding water, ethanol and diethyl ether to the sample and homogenizing the mixture; extracting the resulting mixture with petroleum ether; and washing three times with an aqueous solution of sodium chloride (6%). The POV was measured according to the method described in the Standard Methods for the Analysis of Fats, Oils and Related Materials, 2013 Edition established by the Japan Oil Chemists' Society (JOCS), 2.5.2.1. The results are shown in Table 1.

[Table 1]

| Table 1 POV of gummy | | | | |
| --- | --- | --- | --- | --- |
| Test group | Immediately after preparation | at 35°C for 2 weeks | at 35°C for 3 weeks | at 35°C for 4 weeks |
| 1 | 1 meq/kg or less | 1 meq/kg or less | 1 meq/kg or less | 1 meq/kg or less |

[Example 2]

For the gummy prepared in Example 1a, the gummy samples immediately after preparation, and the gummy samples that had been sealed and had been stored at 35°C under light protection for 2 weeks, 4 weeks or 6 weeks were each subjected to sensory evaluation for raw smell and oxidized odor of fish. The oxidized odor of fish is known to be caused, for example, by 2,4-heptadienal (Annu. Rev. Food Sci. Technol. 2018.9:209-26). The gummy sample used in Comparative Example 1 was a gummy prepared while stirring at a stirring speed of 3000 rpm instead of 200 rpm for 5 minutes or more and less than 30 minutes in step (4) of preparing the mixture of fish oil and the emulsion in Example 1.
Four panelists were selected for the sensory evaluation, who had been specially trained, could correctly identify and express the type of raw smell and oxidized odor of fish, and had no abnormalities in olfactory sensation. The selected panelists were first pre-trained so that the evaluations for raw smell and oxidized odor of fish were consistent between the panelists. The pre-training was carried out by using "IMARK (R) S" (manufactured by Nissui Corporation), a soft drink containing purified fish oil. The "IMARK S" samples immediately after preparation, and after storage for 2 months, 3 months, 4 months and 5 months at 25°C were placed side by side, and subjected to the sensory evaluation. The evaluation was based on the following five-point scale: for each of the raw smell and oxidized odor of fish, the score for the sample immediately after preparation was 5 points, the score for the sample after storage for 2 months was 4 points, the score for the sample after storage for 3 months was 3 points, the score for the sample after storage for 4 months was 2 points, and the score for the sample after storage for 5 months was 1 point. These evaluations were used as evaluation criteria.

5: Smell/odor suppressed and not detectable
4: Smell/odor slightly detectable
3: Smell/odor detectable but not unpleasant
2: Smell/odor detectable and slightly unpleasant, but acceptable as a product
1: Unpleasant smell/odor

After confirming that all panelists were able to correctly evaluate the gummy samples according to the evaluation criteria, the gummy samples were subjected to sensory evaluation. Each panelist assigned, to each sample, a score based on the evaluation criteria to which each sample was judged to be closest. The results are shown in Table 3. In Comparative Example 1, all samples corresponding to those after storage for 2 weeks at 35°C received a score of 1. Therefore, since it could be presumed that all samples corresponding to those after storage for 4 weeks and 6 weeks at 35°C would receive a score of 1, the sensory evaluation was not carried out for each of the samples after storage for 4 weeks and 6 weeks.
As shown in Table 2, the gummy obtained in Example 1 had high points according to the evaluation criteria, that is, the gummy had little raw smell and/or oxidized odor of fish and was highly palatable, for any one immediately after preparation, and after storage for 2 weeks, after storage for 4 weeks and after storage for 6 weeks at 35°C.

[Table 2]

| Table 2 Results of sensory test for gummy | | | | | | | | | |
|---|---|---|---|---|---|---|---|---|---|
| | | Example 1 | | | | Comparative Example 1 | | | |
| Evaluation point | Evaluation item | Panelist A | Panelist B | Panelist C | Panelist D | Panelist A | Panelist B | Panelist C | Panelist D |
| Immediately after preparation | Raw smell | 4 | 5 | 4 | 5 | 2 | 3 | 3 | 4 |
| | Oxidized odor | 4 | 5 | 4 | 5 | 4 | 4 | 2 | 4 |
| Storage 35°C After storage for 2 weeks | Raw smell | 4 | 5 | 4 | 5 | 1 | 1 | 1 | 1 |
| | Oxidized odor | 4 | 5 | 4 | 5 | 1 | 1 | 1 | 1 |
| Storage 35°C After storage for 4 weeks | Raw smell | 4 | 5 | 4 | 5 | | | | |
| | Oxidized odor | 4 | 5 | 3 | 5 | | | | |
| Storage 35°C After storage for 6 weeks | Raw smell | 3 | 5 | 3 | 4 | | | | |
| | Oxidized odor | 3 | 5 | 2 | 4 | | | | |

[Example 3] Study of emulsifying agent

A gummy was prepared by the method in Example 1 using the same conditions as those in Example 1 except that the type of emulsifying agent was changed. For the prepared gummy, the gummy samples immediately after preparation and the gummy samples that had been sealed and had been stored at 35°C under light protection for 2 days was measured for the presence or absence of leakage of fats and oils with a pressure tester (Pressure Tester PS3300, manufactured by M's Co., Ltd.). In the measurement, the gummy was examined for the presence or absence of leakage of fats and oils from the gummy samples to which a load of 17 kg was applied at 25°C for 1 minute. The gummy sample immediately after applying a load was placed on a paper towel. When a stain of fat and oil larger than the size of the gummy sample was observed, it was judged that there was a lot of leakage of fat and oil (×); when a stain of fat and oil smaller than the size of the gummy sample was observed, it was judged that there was leakage of fat and oil (△); and when no stain of fat and oil was observed, it was judged that there was no leakage of fat and oil (○). The results are shown in the upper rows of Table 3, and Table 4 and Table 5.

For the decaglycerol fatty acid ester having an HLB of 7 used in the present Example, when the fish oil and the decaglycerol fatty acid ester were added separately to the gel food solution in step (5) and mixed to prepare a gummy, without subjecting the decaglycerol fatty acid ester to the above step (4) to prepare a mixture thereof with fish oil, the resulting gummy was inadequate and leakage of fat and oil was observed. The results are shown in the bottom row of Table 3.

[Table 3]

| Table 3 Test for leakage of fat and oil - polyglycerol oleate ester emulsifying agent | | | | | |
|---|---|---|---|---|---|
| Composition | Type of fatty acid | HLB | Average degree of polymerization of glycerol | Leakage after load application (After drying) | Leakage after load application (After storage at 40°C for 2 days) |
| Decaglycerol fatty acid ester* Manufactured by Mitsubishi Chemical Co., Ltd. Trade name: Ryoto Polyglye-ster O-50D | C18:1 | 7 | 10 | ○ | ○ |

(continued)

| Table 3 Test for leakage of fat and oil - polyglycerol oleate ester emulsifying agent | | | | | |
|---|---|---|---|---|---|
| Composition | Type of fatty acid | HLB | Average degree of polymerization of glycerol | Leakage after load application (After drying) | Leakage after load application (After storage at 40°C for 2 days) |
| Pentaglycerol fatty acid ester* Manufactured by Taiyo Kagaku Co., Ltd. Trade name: Sunsoft A-173E | C18:1 | 7 | 5 | △ | △ |
| Decaglycerol fatty acid ester* Manufactured by Mitsubishi Chemical Co., Ltd. Trade name: Ryoto Polyglye-ster O-15D | C18:1 | 13 | 10 | × | × |
| Decaglycerol fatty acid ester** Manufactured by Mitsubishi Chemical Co., Ltd. Trade name: Ryoto Polyglye-ster O-50D | C18:1 | 7 | 10 | △ | △ |
| * When the method in Example 1a was used  ** When the method in Example 1b was used | | | | | |

[Table 4]

| Table 4 Test for leakage of fat and oil - polyglycerol saturated fatty acid ester emulsifying agent | | | | | |
|---|---|---|---|---|---|
| Composition | Type of fatty acid | HLB | Average degree of polymerization of glycerol | Leakage after load application (After drying) | Leakage after load application (After storage at 40°C for 2 days) |
| Diglycerol fatty acid ester * Manufactured by Taiyo Kagaku Co., Ltd. Trade name: Sunsoft Q-18D | C18:0 | 7 | 2 | × | × |
| Decaglycerol fatty acid ester* Manufactured by Mitsubishi Che-mical Co., Ltd. Trade name: Ryoto Polyglyester S-24D | C18:0 | 10 | 10 | ○ | ○ |
| Decaglycerol fatty acid ester* Manufactured by Mitsubishi Che-mical Co., Ltd. Trade name: Ryoto Polyglyester M-10D | C18:0 | 15 | 10 | ○ | ○ |
| Decaglycerol fatty acid ester* Manufactured by Mitsubishi Che-mical Co., Ltd. Trade name: Ryoto Polyglyester L-7D | C18:0 | 17 | 10 | × | × |
| * When the method in Example 1a was used | | | | | |

[Table 5]

| Table 5 Test for leakage of fat and oil - sucrose fatty acid ester emulsifying agent | | | | |
|---|---|---|---|---|
| Composition | Type of fatty acid | HLB | Leakage after load application (After drying) | Leakage after load application (After storage at 40°C for 2 days) |
| Sucrose stearate ester* Manufactured by Mitsubishi Chemical Co., Ltd. Trade name: Ryoto Sugar Ester S-570 | C18:0 | 5 | × | × |
| Sucrose stearate ester* Manufactured by Mitsubishi Chemical Co., Ltd. Trade name: Ryoto Sugar Ester S-770 | C18:0 | 7 | △ | △ |
| Sucrose stearate ester* Manufactured by Mitsubishi Chemical Co., Ltd. Trade name: Ryoto Sugar Ester S-1570 | C18:0 | 15 | × | × |
| Sucrose palmitate ester* Manufactured by Mitsubishi Chemical Co., Ltd. Trade name: Ryoto Sugar Ester P-1570 | C16:0 | 15 | × | × |
| Sucrose oleate ester* Manufactured by Mitsubishi Chemical Co., Ltd. Trade name: Ryoto Sugar Ester 0-1570 | C18:1 | 15 | × | × |
| Sucrose laurate ester* Manufactured by Mitsubishi Chemical Co., Ltd. Trade name: Ryoto Sugar Ester LWA-1570 | C12:0 | 15 | △ | △ |
| * When the method in Example 1a was used | | | | |

[Example 4] Hydrophilic emulsifying agent

After the steps that are the same as steps (1) to (3) in Example 1 were carried out, the steps after step (4) were carried out as follows.

(4) Preparation of sugar and emulsifying agent

323 g of emulsifying agent was dissolved in 485 ml of an 8.3% ethanol solution of 50°C to prepare an emulsifying agent ethanol solution. 10.5 g of the emulsifying agent ethanol solution was added to the entire amount of the sugar solution prepared in (2), and the mixture was mixed at a liquid temperature of 95°C while stirring at 200 rpm until the entire mixture was homogeneous to provide a solution of the sugar and the emulsifying agent. The entire mixture was confirmed to be homogeneous since no unevenness in color was observed.

(5) Preparation of gummy

The entire amount of the gelatin solution obtained in (1) was added to the entire amount of the solution of the sugar and the emulsifying agent obtained in (4), and mixed at 90°C for 2 minutes while stirring at 200 rpm until the entire mixture was homogeneous. A total of 20g of ascorbic acid, fruit juice and citric acid were added thereto, and mixed at a liquid temperature of 80°C for 2 minutes until the entire mixture was homogeneous to obtain a gel food solution. 32.1 ml of purified fish oil was added thereto, and mixed at a liquid temperature of 75°C while stirring at 200 rpm until the entire mixture was homogeneous. The entire mixture was confirmed to be homogeneous since no unevenness in color or oil droplet was observed. Thereafter, the mixture was degassed at a liquid temperature of 70°C for 10 seconds × three times with a degassing device (small vacuum packaging machine, manufactured by Furukawa Manufacturing CO., Ltd.) while stirring at 200 rpm, to remove air bubbles. The entire mixture was confirmed to be homogeneous by the invisibility of air bubbles.

Thereafter, gummies were prepared according to a conventional method. The resulting gummies were checked for the presence or absence of leakage of fat and oil in the same manner as in Example 3. The results are shown in Table 6.

When the gummy was prepared in the same manner as the method in Example 1 except that the decaglycerol fatty acid ester used in the present Example was not dissolved in ethanol, the resulting gummy was inadequate.

[Table 6]

| Table 6 Test for leakage of fat and oil - high HLB emulsifying agent | | | | | |
|---|---|---|---|---|---|
| Composition | Type of fatty acid | HLB | Average degree of polymerization of glycerol | Leakage after load application (After drying) | Leakage after load application (After storage at 40°C for 2 days) |
| Decaglycerol fatty acid ester Manufactured by Mitsubishi Chemical Co., Ltd. Trade name: Ryoto Polyglye-ster SWA-20D | C18:0 | 11 | 10 | ○ | ○ |
| Decaglycerol fatty acid ester Manufactured by Mitsubishi Chemical Co., Ltd. Trade name: Ryoto Polyglye-ster SWA-10D | C18:0 | 14 | 10 | ○ | ○ |

As shown in Table 3, in an unsaturated fatty acid, the emulsifying agent having a high average degree of polymerization of glycerol and a low HLB was found to have an excellent effect.

As shown in Table 4, in a saturated fatty acid, the emulsifying agent having a low HLB was found to have an excellent effect.

Comparing the results shown in Table 3 and Table 4, an emulsifying agent having a high degree of unsaturation of the fatty acid moiety bonded to the glycerol moiety of the glycerol fatty acid ester or a high average degree of polymerization of glycerol was found to have a better effect. The emulsifying agent having a low average degree of polymerization of glycerol showed a high leakage of fat and oil.

Comparing the results shown in Table 3, Table 4 and Table 5, the emulsifying agent having a glycerol skeleton was found to have a better effect.

Comparing the results shown in Table 3, Table 4 and Table 6, the emulsifying agent having a high HLB was found to have an excellent effect by preparing in advance the emulsifying agent ethanol solution.

The following paragraphs, identified by alphanumeric references, are provided by way of example only and should not be construed as limiting the present invention.

A. A granular gel food comprising an oil component and a gelling agent, wherein the oil component is a polyunsaturated fatty acid (PUFA), a salt thereof or an ester thereof, and wherein a content of the oil component is 0.1% by weight or more, based on a total weight of the granular gel food (aspect [1-1]).

A1. The granular gel food according to paragraph A, wherein a content of the oil component is 1.0% by weight to 15.0% by weight, based on a total weight of the granular gel food (aspect [1-2]).

A2 The granular gel food according to paragraphs A or A1, wherein the oil component is derived from fish oil (aspect [1-3]).

A3 The granular gel food according to any one of paragraphs A-A2, wherein the PUFA includes EPA or DHA (aspect [1-4]).

A4 The granular gel food according to any one of paragraphs A-A3, wherein the PUFA, a salt thereof or an ester thereof includes one or more of a free fatty acid, a triglyceride, a diglyceride, a monoglyceride, a C1-6 alkyl ester, a cholesterol ester or a sphingosine ester of the PUFA.

A5 The granular gel food according to any one of paragraphs A-A3, wherein the PUFA, a salt thereof or an ester thereof is a free fatty acid, a triglyceride, a diglyceride, a monoglyceride, a C1-6 alkyl ester, a cholesterol ester or a sphingosine ester of the PUFA (aspect [1-5]).

A6 The granular gel food according to any one of paragraphs A-A5 , wherein the PUFA, a salt thereof or an ester thereof includes an ethyl ester of the PUFA.

A7 The granular gel food according to any one of paragraphs A-A6 , wherein the PUFA, a salt thereof or an ester thereof is an ethyl ester of the PUFA (aspect [1-6]).

A8 The granular gel food according to any one of any of paragraphs A-A7 wherein the content of the gelling agent is 5.0% by weight to 15.0% by weight, based on the total weight of the granular gel food (aspect [1-7]).

A9 The granular gel food according to any one of paragraphs A-A8, wherein the gelling agent is selected from gelatin, pectin, carrageenan, agar and starch (aspect [1-8]).

A10 The granular gel food according to any one of paragraphs A-A9 , wherein the gelling agent is gelatin (aspect [1-9]).

A11 The granular gel food according to any one of paragraphs A-A8 and A10, wherein the granular gel food contains no pectin (aspect [1-10]).

A12 The granular gel food according to any one of paragraphs A-A11, wherein the granular gel food further contains an emulsifying agent.

A13 The granular gel food according to paragraph A12 wherein the content of the emulsifying agent is 0.5% by weight to 1.5% by weight, based on the total weight of the granular gel food (aspect [1-11]).

A14 The granular gel food according to paragraph A13, wherein the emulsifying agent includes a glycerol fatty acid ester represented by the following formula I:

$$R^1\text{-}O\text{-}(CH_2\text{-}CH(OR^2)\text{-}CH_2O)_n\text{-}R^3 \qquad (I)$$

wherein:

R1 and R3 are each independently a hydrogen atom or -(CO)R4;
R2 is each independently a hydrogen atom or -(CO)R4;
at least one of R1, R2 and R3 is -(CO)R4;
R4 is each independently a C12-20 alkyl or C12-20 alkenyl;
the C12-20 alkenyl contains one or two or more double bonds; and
n is an integer selected from 1 to 20 (aspect [1-12]).

A15 The granular gel food according to paragraph A14, wherein -(CO)R4 is selected from the group consisting of myristoyl, stearoyl, palmitoyl, lauroyl and oleoyl (aspect [1-13]).

A16 The granular gel food according to paragraph A4 or A15, wherein the glycerol fatty acid ester represented by formula I contains, as a constituent fatty acid, a fatty acid selected from the group consisting of myristic acid, stearic acid, palmitic acid, lauric acid and oleic acid (aspect [1-14]).

A17 The granular gel food according to any one of paragraphs A14-A16, wherein the average degree of polymerization of the glycerol fatty acid ester represented by formula I is 6 to 15 (aspect [1-15]).

A18 The granular gel food according to A17, wherein the glycerol fatty acid ester represented by formula I is a decaglycerol fatty acid ester(aspect [1-16]) .

A19 The granular gel food according to A17, wherein the glycerol fatty acid ester represented by formula I is selected from decaglyceryl oleate, decaglyceryl pentaoleate, polyglyceryl myristate and polyglyceryl stearate (aspect [1-17]).

A20 The granular gel food according to A17, wherein the granular gel food contains no sucrose myristate, sucrose stearate, sucrose palmitate, sucrose laurate or sucrose oleate as the emulsifying agent (aspect [1-18]).

A21 The granular gel food according to any one of paragraphs A13-A19, wherein the granular gel food contains no sucrose fatty acid ester as the emulsifying agent (aspect [1-19]).

A22 The granular gel food according to any one of paragraphs A13-A21 , wherein an HLB value of the emulsifying agent is 0 to 10, 10 to 20, 5 to 15, 5 to 10, 10 to 15, 5 to 9, 8 to 16, 9 to 11, or 11 to 15 (aspect [1-20]).

A23 The granular gel food according to any one of paragraphs A-A22, wherein the granular gel food further contains a fruit-derived component, wherein the content of the fruit-derived component is 1.0% by weight to 5.0% by weight, based on the total weight of the granular gel food (aspect [1-21]).

A24 The granular gel food according to any one of paragraphs A-A23, wherein the granular gel food further contains water, wherein a content of the water is 10.0% by weight to 60.0% by weight, based on a total weight of the granular gel food (aspect [1-22]).

A25 The granular gel food according to any one of paragraphs A-A24, wherein the granular gel food further contains a carbohydrate, wherein the carbohydrate includes sugar and liquid sugar, and a content of the carbohydrate is 10.0% by weight to 70.0% by weight, based on a total weight of the granular gel food (aspect [1-23]).

A26 The granular gel food according to any one of paragraphs A-A25, wherein the granular gel food further contains an antioxidant, wherein a content of the antioxidant is 0.05% by weight to 2.0% by weight, based on a total weight of the granular gel food (aspect [1-24]).

A27 The granular gel food according to paragraph A26, wherein the antioxidant is L-ascorbic acid (aspect [1-25]).

A28 The granular gel food according to any one of paragraphs A-A26, wherein the granular gel food further contains, based on a total weight thereof,

1.00% by weight to 15.00% by weight of fish oil;
5.00% by weight to 15.00% by weight of gelatin;
0.50% by weight to 1.50% by weight of decaglycerol oleate;
1.00% by weight to 5.00% by weight of a fruit juice;
2.00% by weight to 40.00% by weight of water;
5.00% by weight to 50.00% by weight of sugar;
5.00% by weight to 50.00% by weight of liquid sugar; and
0.05% by weight to 2.00% by weight of L-ascorbic acid (aspect [1-26]).

A29 The granular gel food according to any one of paragraphs A-A28, wherein the granular gel food is a gummy (aspect [1-27]).

A30 The granular gel food according to any one of paragraphs A-A29, wherein a peroxide value of the granular gel food is 10 meq/kg or less (aspect [1-28]) .

A31 The granular gel food according to any one of paragraphs A-A30, wherein a peroxide value of the granular gel food immediately after production thereof or after storage at 25 □ C for 3 days or more after production thereof is 10 meq/kg or less (aspect [1-29]).

A32 The granular gel food according to any one of paragraphs A-A31, wherein no leakage of the oil component is observed immediately after production, after storage at 25 □ C for 30 days or more after production, or after storage at 25 □ C for 180 days or more after production (aspect [1-30]).

A33 The granular gel food according to any one of A-A27 and A29 to [1-30], wherein an amount of the oil component converted to a corresponding PUFA free fatty acid is 0.1% by weight or more, based on a total weight of the granular gel food (aspect [1-31]).

A34 The granular gel food according to any one of A-A27 and A29 to A33, wherein an amount of the EPA and DHA contained in the oil component converted to a corresponding EPA free fatty acid and DHA free fatty acid, is 0.1% by weight or more, based on a total weight of the granular gel food (aspect [1-32]).

A35 The granular gel food according to any one of A-A34, wherein an amount of oil component contained in one piece of the granular gel food converted to a corresponding PUFA free fatty acid, is 50 mg or more(aspect [1-33]).

A36 The granular gel food according to any one of A-A35, wherein an amount of EPA and DHA contained in one piece of the granular gel food converted to a corresponding PUFA free fatty acid, is 50 mg or more (aspect [1-34]).

A37 The granular gel food according to any of A-A36, wherein a weight of one piece of the granular gel food is 2 g or more and 6 g or less (aspect [1-35]).

B A method for producing a granular gel food containing a PUFA, including:

(1) mixing the PUFA, a salt thereof or an ester thereof with a gelling agent to obtain a mixture; and
(2) gelling the mixture obtained in step (1) to obtain the granular gel food (aspect [2-1]).

B1 The method according to paragraph B, including, prior to step (1), (3) mixing the PUFA, salt thereof or ester thereof with an emulsifying agent to obtain a mixture (aspect [2-2]).

B2 The method according to paragraph B1 , wherein an HLB value of the emulsifying agent is less than 16 (aspect [2-3]).

B3 The method according to any one of paragraphs B-B2, wherein the mixing in step (1) or step (3) is carried out at a stirring speed of 1000 rpm or less, 300 rpm, 100 rpm or less, or 60 rpm or less (aspect [2-4]).

B4 The method according to any one of paragraphs B-B3, wherein the mixing in step (1) is carried out under gas displacement or under reduced pressure in a vessel for carrying out the mixing (aspect [2-5]).

B5 The method according to any one of paragraphs B-B3, wherein the mixing in step (3) is carried out under gas displacement or under reduced pressure in a vessel for carrying out the mixing (aspect [2-6]).

B6 The method according to any one of paragraphs B-B5, wherein the granular gel food is stored at room temperature for 2 days or more after the gelling in step (2) (aspect [2-7]).

B7 The method according to B6, wherein the storing is carried out in a shielded container or under light protection (aspect [2-8]).

B8 The method according to any one of paragraphs B-B7, wherein the granular gel food is the granular gel food according to any one of paragraphs A-A37 (aspect [2-9]).

B9 A granular gel food obtained by the method for producing a granular gel food according to any one of paragraphs B-B8 (aspect [2-10]).

C A method for producing a granular gel food containing PUFA, including:

(1) obtaining a solution, of an emulsifying agent and a gelling agent, in which the emulsifying agent and the gelling agent are dissolved in an amphiphilic solvent;

(2) mixing the PUFA, a salt thereof or an ester thereof with an emulsifying agent gel solution to obtain a mixture; and

(3) gelling the mixture obtained in step (2) to obtain a granular gel food (aspect [3-1]).

C1 The method according to paragraph C, wherein in step (1), the gelling agent is added to the amphiphilic emulsifying agent solution in which the emulsifying agent is dissolved in the amphiphilic solvent to prepare the solution of emulsifying agent and gelling agent (aspect [3-2]).

C2 The method according to paragraph C or C1, wherein the amphiphilic solvent is ethanol(aspect [3-3]).

C3 The method according to any one of paragraphs C-C2, wherein an HLB value of the emulsifying agent is 8 or more and 16 or less (aspect [3-4]).

C4 The method according to any one of paragraphs C-C3, wherein an HLB value of the emulsifying agent is more than 10 (aspect [3-5]).

C5 The method according to any one of paragraphs C-C4, wherein the mixing in step (1) or step (2) is carried out at a stirring speed of 1000 rpm or less, 300 rpm, 100 rpm or less, or 60 rpm or less (aspect [3-6]).

C6 The method according to any one of paragraphs C-C5, wherein the mixing in step (1) or step (2) is carried out under gas displacement or under reduced pressure in a vessel (aspect [3-7]).

C7 The method according to any one of paragraphs C-C6, wherein the granular gel food is stored at room temperature for 2 days or more after the gelling in step (3) (aspect [3-8]).

C8 The method according to paragraph C7, wherein the storing is carried out in a shielded container or under light protection (aspect [3-9]).

C9 The method according to any one of paragraphs C-C8, wherein the granular gel food is the granular gel food according to any one of A-A37 (aspect [3-10]).

C10 A granular gel food obtained by the method for producing a granular gel food according to any one of paragraphs C-C9 (aspect [3-11]).

C11 The method according to any one of C-C8, wherein a ratio of the gelling agent to the emulsifying agent in the solution of the emulsifying agent and the gelling agent obtained in step (1) is 1:3 to 3:1 (aspect [3-12]).

D A mixture obtained by mixing a PUFA, a salt thereof, or an ester thereof with a gelling agent in the method for producing a granular gel food according to any one of paragraphs B-B8 (aspect [4-1]) .

D1 An emulsifying agent composition obtained by mixing a PUFA, a salt thereof, or an ester thereof with an emulsifying agent in the method for producing a granular gel food according to any one of B1-B8 (aspect [4-2]).

D2 The emulsifying agent composition according to D1, wherein a ratio of the oil component to the emulsifying agent is 1:3 to 3:1, and a total content of the oil component and the emulsifying agent is 50% by weight or more, based on a total weight of the emulsifying agent composition (aspect [4-3]).

E An emulsifying agent composition containing an oil component and an emulsifying agent, wherein the oil component is a polyunsaturated fatty acid (PUFA), a salt thereof or an ester thereof, a ratio of the oil component to the emulsifying agent is 1:3 to 3:1, and a total content of the oil component and the emulsifying agent is 50% by weight or more, based on a total weight of the emulsifying agent composition (aspect [4-4]).

E1 The emulsifying agent composition according to any one of D1-E, which is obtained as an intermediate in the method for producing a granular gel food according to any one of B1-B7 (aspect [4-5]).

F An emulsifying agent composition containing a gelling agent and an emulsifying agent, wherein a ratio of the gelling agent to the emulsifying agent is 1:3 to 3:1, and a total content of the gelling agent and the emulsifying agent is 50% by weight or more, based on a total weight of the emulsifying agent composition (aspect [4-6]).

F1 The emulsifying agent composition according to E1, wherein the emulsifying agent is a decaglycerol fatty acid ester (aspect [4-7]).

F2 The emulsifying agent composition according to E1-FF1, wherein an HLB of the emulsifying agent is 8 or more and 16 or less (aspect [4-8]).

F3 The emulsifying agent composition according to any one of F-F2 which is obtained by mixing the emulsifying agent with an amphiphilic solvent and water, followed by warming and mixing the emulsifying agent with the gelling agent (aspect [4-9]).

F4 The emulsifying agent composition according to F2, wherein the amphiphilic solvent is ethanol (aspect [4-10]).

F5 The emulsifying agent composition according to any one of F-F4, which is obtained as an intermediate in the method for producing a granular gel food according to any one of C-C9 (aspect [4-11]).

**Claims**

1. A granular gel food comprising an oil component and a gelling agent, wherein the oil component is a polyunsaturated fatty acid (PUFA), a salt thereof or an ester thereof, and a content of the oil component is 0.1% by weight or more, based on a total weight of the granular gel food.

2. The granular gel food according to claim 1, wherein either of the following conditions is verified:

   (i) the PUFA comprises EPA or DHA,
   (ii) the PUFA, salt thereof or ester thereof is an ethyl ester of the PUFA,
   (iii) a content of the gelling agent is 5.00% by weight to 15.00% by weight, based on a total weight of the granular gel food,
   (iv) the gelling agent is selected from gelatin, pectin, carrageenan, agar and starch.
   (v), the granular gel food further comprises an emulsifying agent, wherein a content of the emulsifying agent is 0.50% by weight to 1.50% by weight, based on a total weight of the granular gel food,

   wherein the emulsifying agent comprises a glycerol fatty acid ester represented by the following formula I:

   $$R^1\text{-O-}(CH_2\text{-CH}(OR^2)\text{-CH}_2O)_n\text{-}R^3 \qquad (I)$$

   wherein:

   $R^1$ and $R^3$ are each independently a hydrogen atom or -(CO)$R^4$;
   $R^2$ is each independently a hydrogen atom or -(CO)$R^4$;
   at least one of $R^1$, $R^2$ and $R^3$ is -(CO)$R^4$;
   $R^4$ is each independently a $C_{12\text{-}20}$ alkyl or $C_{12\text{-}20}$ alkenyl;
   the $C_{12\text{-}20}$ alkenyl contains one or two or more double bonds; and
   n is an integer selected from 1 to 20.

3. The granular gel food according to any one of claims 1 to 2, wherein the granular gel food comprises, based on the total weight thereof,

   1.00% by weight to 15.00% by weight of fish oil;
   5.00% by weight to 15.00% by weight of gelatin;
   0.50% by weight to 1.50% by weight of decaglycerol oleate ester;
   1.00% by weight to 5.00% by weight of fruit juice;
   2.00% by weight to 40.00% by weight of water;
   5.00% by weight to 50.00% by weight of sugar;
   5.00% by weight to 50.00% by weight of liquid sugar; and
   0.05% to 2.00% by weight of L-ascorbic acid.

4. The granular gel food according to any one of claims 1 to 3, wherein either of the following conditions is verified:

   (i) a peroxide value of the granular gel food is 10 meq/kg or less,
   (ii) a peroxide value of the granular gel food immediately after production thereof or after storage at 25°C for 3 days or more after production thereof is 10 meq/kg or less.

5. The granular gel food according to any one of claims 1 to 2, and 4, wherein an amount of the oil component converted to corresponding PUFA free fatty acid is 0.1% by weight or more, based on a total weight of the granular gel food.

6. A method for producing a granular gel food comprising a PUFA, comprising:

   (1) mixing the PUFA, a salt thereof or an ester thereof with a gelling agent to obtain a mixture; and
   (2) gelling the mixture obtained in step (1) to obtain the granular gel food.

7. The method according to claim 6, either of the following conditions is verified: (i) the method comprises, prior to step (1),
(3) mixing the PUFA, a salt thereof or an ester thereof with an emulsifying agent to obtain a mixture.

   (ii) the granular gel food is stored at room temperature for 2 days or more after the gelling in step (2) wherein the storing is performed in a shielded container or under light protection.

8. A method for producing a granular gel food comprising a PUFA, comprising:

   (1) obtaining a solution, of an emulsifying agent and a gelling agent, in which the emulsifying agent and the gelling agent are dissolved in an amphiphilic solvent;
   (2) mixing the PUFA, a salt thereof or an ester thereof with an emulsifying agent gel solution to obtain a mixture; and
   (3) gelling the mixture obtained in step (2) to obtain the granular gel food.

9. The method according to claim 8, wherein either of the following conditions is verified:

   (i) in step (1), the gelling agent is added to the amphiphilic emulsifying agent solution in which the emulsifying agent is dissolved in the amphiphilic solvent to prepare the solution of the emulsifying agent and the gelling agent.
   (iii) the amphiphilic solvent is ethanol,
   (ii) (iv) the mixing in step (1) or step (2) is carried out at a stirring speed of 1000 rpm or less, 300 rpm, 100 rpm or less, or 60 rpm or less,

10. The method according to any one of claims 6 to 9, wherein the granular gel food is the granular gel food according to any one of claims 1 to 5.

11. An emulsifying agent composition comprising an oil component and an emulsifying agent, wherein the oil component is a polyunsaturated fatty acid (PUFA), a salt thereof or an ester thereof, a ratio of the oil component to the emulsifying agent is 1:3 to 3:1, and a total content of the oil component and the emulsifying agent is 50% by weight or more, based on a total weight of the emulsifying agent composition.

12. The emulsifying agent composition according to claim 11, wherein the emulsifying agent composition is an intermediate obtained in the method according to any one of claims 6 or 7.

13. An emulsifying agent composition comprising a gelling agent and an emulsifying agent, wherein a ratio of the gelling agent to the emulsifying agent is 1:3 to 3:1, and a total content of the gelling agent and the emulsifying agent is 50% by weight or more, based on a total weight of the emulsifying agent composition.

14. The emulsifying agent composition according to claim 13, wherein either of the following conditions is verified:

   (i) the emulsifying agent is an intermediate obtained in the method according to any one of claims 8 to 9 or the emulsifying agent is a decaglycerol fatty acid ester;
   (ii) an HLB of the emulsifying agent is 5 or more and 15 or less,
   (iii) the emulsifying agent composition is obtained by mixing the emulsifying agent with an amphiphilic solvent and water, followed by warming and mixing the emulsifying agent with the gelling agent, wherein the amphiphilic solvent is ethanol.

15. A granular gel food obtained by the method for producing a granular gel food according to any one of claims 6 to 7.

## EUROPEAN SEARCH REPORT

**Application Number**

EP 25 19 1810

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/305457 A1 (PARK JIN WOO [KR] ET AL) 1 October 2020 (2020-10-01) * claims; examples; tables 1,2 * | 1-15 | INV. A23D7/005 A23D7/01 |
| X | US 2023/345964 A1 (MORIKAWA MIWAKO [JP]) 2 November 2023 (2023-11-02) * claims; examples; tables * | 1-15 | |
| X,D | JP 2018 046788 A (UHA MIKAKUTO CO LTD) 29 March 2018 (2018-03-29) * claims; examples; table 1 * | 1-15 | |
| A | KANAYA KENTO ET AL: "Development of Enteric-Coated S/O Microcapsules Utilizing Edible Fats", JOURNAL OF CHEMICAL ENGINEERING OF JAPAN, vol. 45, no. 2, 1 January 2012 (2012-01-01), pages 82-88, XP093331480, JP ISSN: 0021-9592, DOI: 10.1252/jcej.11we105 Retrieved from the Internet: URL:https://www.jstage.jst.go.jp/article/jcej/advpub/0/advpub_11we105/_pdf> * paragraph [01.1] * | 1-15 | |
| X,D | JP H11 56245 A (NIPPON SYNTHETIC CHEM IND) 2 March 1999 (1999-03-02) * examples * | 1-15 | |
| X | EP 3 964 199 A1 (SIRIO PHARMA CO LTD [CN]) 9 March 2022 (2022-03-09) * claims; examples; tables * | 1-15 | |
| X | WO 03/024237 A1 (KAO CORP [JP]; TAKASE HIDETO [JP] ET AL.) 27 March 2003 (2003-03-27) * table 1 * | 11 | |

**TECHNICAL FIELDS SEARCHED (IPC)**

A23D

The present search report has been drawn up for all claims

| Place of search | Date of completion of the search | Examiner |
|---|---|---|
| The Hague | 3 November 2025 | Saettel, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 1810

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | | | Publication date | Patent family member(s) | | Publication date |
|---|---|---|---|---|---|---|
| US 2020305457 | A1 | | 01-10-2020 | AU | 2019204266 A1 | 15-10-2020 |
| | | | | KR | 20200116364 A | 12-10-2020 |
| | | | | US | 2020305457 A1 | 01-10-2020 |
| US 2023345964 | A1 | | 02-11-2023 | JP | 6958766 B1 | 02-11-2021 |
| | | | | JP | WO2021229958 A1 | 18-11-2021 |
| | | | | KR | 20230011917 A | 25-01-2023 |
| | | | | US | 2023345964 A1 | 02-11-2023 |
| JP 2018046788 | A | | 29-03-2018 | NONE | | |
| JP H1156245 | A | | 02-03-1999 | NONE | | |
| EP 3964199 | A1 | | 09-03-2022 | AU | 2020339539 A1 | 24-03-2022 |
| | | | | CA | 3146688 A1 | 04-03-2021 |
| | | | | CN | 110478312 A | 22-11-2019 |
| | | | | CN | 111803439 A | 23-10-2020 |
| | | | | CN | 111803440 A | 23-10-2020 |
| | | | | EP | 3964199 A1 | 09-03-2022 |
| | | | | JP | 7433417 B2 | 19-02-2024 |
| | | | | JP | 2022550506 A | 02-12-2022 |
| | | | | KR | 20220036958 A | 23-03-2022 |
| | | | | US | 2022218603 A1 | 14-07-2022 |
| | | | | WO | 2021037122 A1 | 04-03-2021 |
| WO 03024237 | A1 | | 27-03-2003 | AT | E386440 T1 | 15-03-2008 |
| | | | | AU | 2002328058 B2 | 24-04-2008 |
| | | | | BR | 0212493 A | 24-08-2004 |
| | | | | CA | 2495146 A1 | 27-03-2003 |
| | | | | CN | 1582116 A | 16-02-2005 |
| | | | | DE | 60225151 T2 | 26-02-2009 |
| | | | | EP | 1424907 A1 | 09-06-2004 |
| | | | | ES | 2302838 T3 | 01-08-2008 |
| | | | | JP | 4116844 B2 | 09-07-2008 |
| | | | | JP | 2003160794 A | 06-06-2003 |
| | | | | KR | 20040036941 A | 03-05-2004 |
| | | | | TW | I244375 B | 01-12-2005 |
| | | | | US | 2004265466 A1 | 30-12-2004 |
| | | | | WO | 03024237 A1 | 27-03-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012046500 A
- JP 11056245 A
- JP 2019071803 A
- JP 2008259519 A
- JP 7227227 A
- JP 2018046788 A
- JP 2015100304 A

**Non-patent literature cited in the description**

- Oils and Related Materials. **2013**. Standard Methods for the Analysis of Fats. Japan Oil Chemists' Society (JOCS)
- Oils and Related Materials. Standard Methods for the Analysis of Fats. Japan Oil Chemists' Society (JOCS), 2013
- *Annu. Rev. Food Sci. Technol.*, 2018, vol. 9, 209-26